# EUROPÄISCHE PATENTSCHRIFT

(11) **EP 3 435 827 B1**
(45) Veröffentlichungstag und Bekanntmachung des Hinweises auf die Patenterteilung: **27.10.2021**
(21) Anmeldenummer: 16713882.5
(22) Anmeldetag: 31.03.2016
(51) Int. Cl.: A47L 5/38, A47L 9/24

(54) **FLUIDSCHLAUCHSTABILISIERUNGSVORRICHTUNG, FLUIDSCHLAUCH UND REINIGUNGSGERÄT**
STABILIZING DEVICE FOR A FLUID HOSE, FLUID HOSE AND CLEANING APPARATUS
DISPOSITIF DE STABILSATION POUR UN TUYAU À FLUIDE, TUYAU À FLUIDE ET APPAREIL DE NETTOYAGE

(43) Veröffentlichungstag der Anmeldung: 06.02.2019
(73) Patentinhaber: Alfred Kärcher SE & Co. KG, 71364 Winnenden (DE)
(72) Erfinder: ULRICHSKÖTTER, Heinz-Peter, 73630 Remshalden (DE); SCHLICHENMAIER, Steffen, 71554 Weissach im Tal (DE)
(74) Vertreter: Hoeger, Stellrecht & Partner Patentanwälte mbB
(86) Internationale Anmeldenummer: PCT/EP2016/057121
(87) Internationale Veröffentlichungsnummer: WO 2017/167383

(56) Entgegenhaltungen:
- EP-A2- 1 618 825
- US-A- 5 495 689
- US-A1- 2008 199 245

## Beschreibung

Die vorliegende Erfindung betrifft eine Fluidschlauchstabilisierungsvorrichtung zum Stabilisieren eines Fluidschlauchs eines Reinigungsgeräts.

Ferner betrifft die vorliegende Erfindung einen Fluidschlauch für ein Reinigungsgerät.

Außerdem betrifft die vorliegende Erfindung ein Reinigungsgerät.

Reinigungsgeräte der eingangs beschriebenen Art sind in vielfältiger Weise bekannt, beispielsweise als Sauggeräte oder Hochdruckreinigungsgeräte. Derartige Geräte werden insbesondere als Selbstbedienungsreinigungsgeräte beispielsweise an Tankstellen oder Selbstbedienungsreinigungsanlagen bereitgestellt. Da bei einem stationären, also nicht bewegbaren Reinigungsgerät, der Fluidschlauch eine gewisse Länge aufweisen muss, damit eine Person zum Reinigen beispielsweise eines Fahrzeugs mit einem freien Ende des Fluidschlauchs alle gewünschten Stellen am Fahrzeug erreichen kann, werden zur Führung des Fluidschlauchs Fluidschlauchstabilisierungsvorrichtungen der eingangs beschriebenen Art eingesetzt. Diese umfassen beispielsweise Ausleger, den Fluidschlauch umgebende Rohrsysteme, Seilzüge mit Federn oder Gewichten, welche insbesondere einerseits am Reinigungsgerät oder einem Ausleger und andererseits am Fluidschlauch befestigt sind. Statt derartiger Fluidschlauchstabilisierungsvorrichtungen sind alternativ auch Aufwicklungsvorrichtungen zum Aufwickeln des Fluidschlauchs bekannt, so dass er nur auf einer für seinen Einsatz erforderlichen Länge freigegeben wird.

Die bekannten Lösungen sind teilweise sehr aufwändig und daher mit einem hohen Installationsaufwand und entsprechend hohen Kosten verbunden.

Eine Fensterreinigungsvorrichtung ist aus der US 2008/0199245 A1 bekannt. In der EP 1 618 825 A1 ist eine Schlauchanordnung für einen Staubsauger beschrieben. Die US 5,495,689 offenbart einen Fischfinder und eine Stabanordnung.

Es ist daher eine Aufgabe der vorliegenden Erfindung, eine Fluidschlauchstabilisierungsvorrichtung, einen Fluidschlauch und ein Reinigungsgerät der eingangs beschriebenen Art so zu verbessern, dass ein Fluidschlauch eines Reinigungsgeräts auf einfache Weise stabilisiert werden kann.

Diese Aufgabe wird bei einer Fluidschlauchstabilisierungsvorrichtung der eingangs beschriebenen Art erfindungsgemäß dadurch gelöst, dass sie mindestens einen Vorrichtungsabschnitt mit einem ersten und einem zweiten Ende aufweist, dass der Vorrichtungsabschnitt einen Elastizitätsmodul aufweist, dass sich der Elastizitätsmodul ausgehend vom ersten Ende in Richtung auf das zweite Ende des Vorrichtungsabschnitts hin ändert, dass die Fluidschlauchstabilisierungsvorrichtung mindestens ein langgestrecktes, stabförmiges und elastisch biegbares Verstärkungselement umfasst und dass das mindestens eine Verstärkungselement mindestens teilweise oder abschnittsweise den Vorrichtungsabschnitt bildet, dass sich der Elastizitätsmodul zwischen dem ersten und dem zweiten Ende mindestens abschnittsweise kontinuierlich und/oder in mindestens einer Stufe ändert, dass der Elastizitätsmodul des Vorrichtungsabschnitts zwischen dem ersten und dem zweiten Ende abnimmt und dass die Fluidschlauchstabilisierungsvorrichtung einen Befestigungsabschnitt zum Festlegen oder Befestigen an einem Reinigungsgerät aufweist.

Eine solche Fluidschlauchstabilisierungsvorrichtung ermöglicht es auf einfache Weise, einen Fluidschlauch insbesondere auf einem Teil seiner Länge in gewünschter Weise zu stabilisieren. Durch den sich ändernden Elastizitätsmodul des Vorrichtungsabschnitts wird zudem erreicht, dass eine von der Fluidschlauchstabilisierungsvorrichtung im Falle einer Auslenkung des Fluidschlauchs wirkende Rückstellkraft nichtlinear einstellbar ist. Auf diese Weise kann die Handhabung des Fluidschlauchs verbessert werden, da nur dann signifikante Kräfte zum Bewegen und Auslenken des Fluidschlauchs aus einer Grundstellung heraus erforderlich sind, wenn der Fluidschlauch auch tatsächlich in extremer Weise ausgelenkt werden muss. Die Fluidschlauchstabilisierungsvorrichtung kann insbesondere ein Abknicken des Fluidschlauchs längs ihrer Längserstreckung verhindern, also beispielsweise vom Austritt aus einem Reinigungsgerät bis hin zu einem freien Ende der Fluidschlauchstabilisierungsvorrichtung. Ferner kann durch die Fluidschlauchstabilisierungsvorrichtung insbesondere auch verhindert werden, dass der Fluidschlauch den Boden berührt. Vorzugsweise werden eine Länge und der Elastizitätsmodul der Fluidschlauchstabilisierungsvorrichtung so aufeinander und den damit stabilisierten Fluidschlauch abgestimmt, dass der Fluidschlauch den Boden nie berührt, und zwar unabhängig von einer Auslenkung des Fluidschlauchs und der Fluidschlauchstabilisierungsvorrichtung aus einer Grundstellung. So soll auch dann, wenn der Fluidschlauch beispielsweise mit seinem freien Ende in eine am Reinigungsgerät dafür vorgesehene Halterung eingreift, der Fluidschlauch den Boden nicht berühren. Die Fluidschlauchstabilisierungsvorrichtung hält also den Fluidschlauch insbesondere auf einer vorbestimmten Höhe. Ein stabförmiges Verstärkungselement kann optional auch mindestens abschnittsweise hohl sein, beispielsweise auch durchgehend, so dass im Verstärkungselement offene oder geschlossene Hohlräume oder ein das Verstärkungselement durchsetzender Längskanal ausgebildet werden können. Vorteilhaft ist es, dass sich der Elastizitätsmodul zwischen dem ersten und dem zweiten Ende mindestens abschnittsweise kontinuierlich und/oder in mindestens einer Stufe ändert. Beispielsweise kann sich der Elastizitätsmodul ein- oder mehrstufig ändern, das heißt er kann längs eines Teils des Vorrichtungsabschnitts konstant bleiben, sich einstufig ändern, beispielsweise abnehmen, dann wieder konstant bleiben und gegebenenfalls nochmals einstufig oder auch mehrstufig ändern. Der Elastizitätsmodul kann jedoch auch kontinuierlich abnehmen oder auch exponentiell. Hier sind grundsätzlich alle Varianten denkbar. Gemäß der Erfindung nimmt der Elastizitätsmodul des Vorrichtungsabschnitts zwischen dem ersten und dem zweiten Ende ab. Beispielsweise dann, wenn das erste Ende des Vorrichtungsabschnitts näher am Reinigungsgerät angeordnet ist als das zweite Ende des Vorrichtungsabschnitts, führt eine auf ein freies, vom Reinigungsgerät weg weisendes Ende des Fluidschlauchs ausgeübte Zugkraft zunächst nur zu einer Verformung des Bereichs der Fluidstabilisierungsvorrichtung, welcher den kleinsten Elastizitätsmodul aufweist, also am leichtesten verformbar ist. Damit kann eine Verformung der Fluidschlauchstabilisierungsvorrichtung insgesamt in gewünschter Weise vorgegeben und der Fluidschlauch damit definiert stabilisiert und geführt oder gestützt werden. Gemäß der Erfindung weist die Fluidstabilisierungsvorrichtung einen Befestigungsabschnitt zum Festlegen oder Befestigen an einem Reinigungsgerät auf. Mit dem Befestigungsabschnitt lässt sich die Fluidschlauchstabilisierungsvorrichtung insbesondere auf einfache Weise an einem Reinigungsgerät festlegen. Beispielsweise kann der Befestigungsabschnitt an eine Aufnahme des Reinigungsgeräts angepasst sein derart, dass der Befestigungsabschnitt kraft- und/oder formschlüssig in die Aufnahme einsetzbar ist.

Besonders einfach und kostengünstig ausbilden lässt sich die Fluidstabilisierungsvorrichtung, wenn das mindestens eine langgestreckte Verstärkungselement aus einem nicht verstärkten Kunststoff oder einem nicht faserverstärkten Kunststoff oder einem mit Glasfasern oder Kohlenstofffasern verstärkten Kunststoff oder aus mindestens einer Blattfeder hergestellt oder ausgebildet ist. Insbesondere können auch mehrere Blattfedern unterschiedlicher Länge zu einem Blattfederpaket gebündelt und optional an einem gemeinsamen Ende miteinander verbunden sein. Die mindestens eine Blattfeder kann beispielsweise aus einem Federstahl hergestellt sein. Optional kann die mindestens eine Blattfeder mit einer Antikorrosionsschicht versehen sein, beispielsweise einer Pulver- oder Kunststoffbeschichtung.

Günstig ist es, wenn sich der Befestigungsabschnitt ausgehend von einem ersten Ende der Fluidschlauchstabilisierungsvorrichtung erstreckt. Man kann also die Fluidschlauchstabilisierungsvorrichtung mit ihrem ersten Ende oder in einem Bereich ihres ersten Endes auf einfache Weise an einem Reinigungsgerät oder dergleichen festlegen. Der Fluidschlauch kann dann optional längs einer Erstreckung der Fluidschlauchstabilisierungsvorrichtung mit dieser gekoppelt oder an dieser befestigt werden. Eine Befestigung des Fluidschlauchs längs des Befestigungsabschnitts kann vorgesehen sein, ist jedoch nicht zwingend erforderlich.

Vorteilhaft ist es, wenn der Befestigungsabschnitt ein erstes und ein zweites Ende aufweist und wenn ein Elastizitätsmodul des Befestigungsabschnitts längs seiner Erstreckung von seinem ersten zu seinem zweiten Ende konstant oder im Wesentlichen konstant ist. Beispielsweise lässt sich ein solcher Befestigungsabschnitt auf einfache Weise ausbilden durch ein oder mehrere Verstärkungselemente, die insgesamt einen konstanten Querschnitt aufweisen. Für einen solchen Befestigungsabschnitt kann auch eine entsprechende Aufnahme an einem Reinigungsgerät auf einfache Weise ausgebildet werden.

In einer weiteren bevorzugten Ausführungsform der Erfindung kann vorgesehen sein, dass die Fluidschlauchstabilisierungsvorrichtung mehrere langestreckte, stabförmige und elastisch biegbare Verstärkungselemente umfasst. Beispielsweise lässt sich so ein Elastizitätsmodul der Fluidschlauchstabilisierungsvorrichtung auf einfache Weise durch Ändern einer Anzahl der zu ihrer Ausbildung eingesetzten Verstärkungselemente ändern.

Günstig ist es, wenn die mehreren Verstärkungselemente jeweils eine unterschiedliche Länge aufweisen. Damit ändert sich ein Elastizitätsmodul der Fluidschlauchstabilisierungsvorrichtung insbesondere stufenweise dadurch, dass sich eine Anzahl der zur Ausbildung der Fluidschlauchstabilisierungsvorrichtung eingesetzten Verstärkungselemente längs einzelner Vorrichtungsabschnitte ändert. Beispielsweise weisen zwei identische Verstärkungselemente einen geringeren Elastizitätsmodul auf als drei oder mehr Verstärkungselemente derselben Art, die sich über denselben Vorrichtungsabschnitt erstrecken.

Besonders einfach herstellen lässt sich die Fluidschlauchstabilisierungsvorrichtung, wenn mindestens eines der mehreren Verstärkungselemente einen konstanten Querschnitt längs seiner Erstreckung aufweist. Beispielsweise kann so eine Fluidschlauchstabilisierungsvorrichtung auf einfache Weise aus identisch geformten Stäben mit identischem Querschnitt, beispielsweise einem kreisförmigen, ovalen oder vieleckigen Querschnitt, ausgebildet werden, wobei sich die Verstärkungselemente lediglich in ihrer Länge unterscheiden.

Auf einfache Weise herstellen lässt sich die Fluidschlauchstabilisierungsvorrichtung, wenn mindestens eines der mehreren Verstärkungselemente einen konstanten Elastizitätsmodul längs seiner Erstreckung aufweist. Beispielsweise kann das mindestens eine der mehreren Verstärkungselemente auf einfache Weise dadurch ausgebildet werden, dass es einen konstanten Querschnitt längs seiner Erstreckung aufweist.

Vorteilhaft kann es ferner sein, wenn das mindestens eine Verstärkungselement oder mindestens eines der mehreren Verstärkungselemente einen abnehmenden Querschnitt längs seiner Erstreckung aufweist. Insbesondere kann der Querschnitt kontinuierlich und/oder in mindestens einer Stufe abnehmen. Insbesondere kann also auch nur ein einziges Verstärkungselement vorgesehen sein, das seinen Querschnitt in der beschriebenen Weise ändert. Durch den abnehmenden Querschnitt mindestens eines der mehreren Verstärkungselemente kann so ein Elastizitätsmodul der Fluidschlauchstabilisierungsvorrichtung abschnittsweise kontinuierlich und abgestuft geändert werden.

Vorteilhaft ist es, wenn das mindestens eine Verstärkungselement oder mindestens eines der mehreren Verstärkungselemente ein erstes Ende und zweites Ende aufweist und wenn sich ein Elastizitätsmodul ausgehend vom ersten Ende in Richtung auf das zweite Ende hin ändert. Insbesondere kann sich der Elastizitätsmodul kontinuierlich und/oder in mindestens einer Stufe ändern. Auf diese Weise lässt sich der Elastizitätsmodul der Fluidschlauchstabilisierungsvorrichtung in gewünschter Weise einstellen.

Vorzugsweise nimmt der Elastizitätsmodul des mindestens einen Verstärkungselements oder des mindestens einen der mehreren Verstärkungselemente zwischen dem ersten und dem zweiten Ende ab. Damit nimmt eine Elastizität und Verformbarkeit der Fluidschlauchstabilisierungsvorrichtung zu einem freien Ende hin, das mit dem Fluidschlauch gekoppelt ist, sukzessive ab und wird dort bei einer auftretenden Zugkraft zuerst verformt und erst mit weiter zunehmender Zugkraft zu ihrem anderen Ende hin, das insbesondere am Reinigungsgerät festgelegt sein kann.

Günstigerweise sind die mehreren Verstärkungselemente voneinander getrennt ausgebildet. Damit sind sie einfach handhabbar und gegebenenfalls auch im Falle einer Beschädigung einzeln ersetzbar. Ferner kann bei einer erforderlichen Erhöhung des Elastizitätsmoduls einfach ein weiteres Verstärkungselement zur Ausbildung der Fluidschlauchstabilisierungsvorrichtung hinzugenommen werden.

Auf besonders einfache und stabile Weise lässt sich die Fluidschlauchstabilisierungsvorrichtung ausbilden, wenn die mehreren Verstärkungselemente bündelartig zur Ausbildung der Fluidschlauchstabilisierungsvorrichtung miteinander verbunden oder gekoppelt sind. Beispielsweise können die mehreren Verstärkungselemente durch eine Umhüllung miteinander gekoppelt sein oder durch Verbindungselemente, wie beispielsweise Schellen oder Kabelbinder oder dergleichen.

Gemäß einer weiteren bevorzugten Ausführungsform der Erfindung kann vorgesehen sein, dass die mehreren Verstärkungselemente derart angeordnet sind, dass ein erstes Ende der Fluidschlauchstabilisierungsvorrichtung durch mindestens ein erstes Ende eines der mehreren Verstärkungselemente definiert ist. Insbesondere kann das erste Ende der Fluidschlauchstabilisierungsvorrichtung durch alle ersten Enden der mehreren Verstärkungselemente definiert sein. Auf diese Weise lassen sich die mehreren Verstärkungselemente auf einfache Weise beispielsweise an einem Reinigungsgerät oder dergleichen befestigen.

Vorteilhaft ist es, wenn die mehreren Verstärkungselemente derart angeordnet sind, dass ein zweites Ende der Fluidschlauchstabilisierungsvorrichtung durch mindestens ein zweites Ende der mehreren Verstärkungselemente definiert ist. Insbesondere kann das zweite Ende der Fluidschlauchstabilisierungsvorrichtung durch alle zweiten Enden der mehreren Verstärkungselemente definiert sein. In diesem zuletzt genannten Fall weisen die mehreren Verstärkungselemente mindestens teilweise einen Elastizitätsmodul auf, der sich längs ihrer Erstreckung ändert, beispielsweise kontinuierlich und/oder in Stufen. Werden mehrere Verstärkungselemente unterschiedlicher Länge angeordnet, bildet lediglich ein einziges zweites Ende eines der mehreren Verstärkungselemente das zweite Ende der Fluidschlauchstabilisierungsvorrichtung. Im Bereich dieses zweiten Endes weist dann die Fluidschlauchstabilisierungsvorrichtung den kleinsten Elastizitätsmodul auf.

Ferner ist es günstig, wenn die mehreren Verstärkungselemente hintereinander angeordnet sind derart, dass sich ihre jeweiligen Einzellängen zu einer Gesamtlänge addieren. So lässt sich beispielweise eine Fluidschlauchstabilisierungsvorrichtung ausbilden mit mehreren Abschnitten, deren Elastizitätsmodule durch die Elastizitätsmodule der einzelnen Verstärkungselemente definiert werden. Eine Abstufung der Elastizitätsmodule kann dann insbesondere im Übergangsbereich zwischen zwei miteinander kraft- und/oder formschlüssig oder stoffschlüssig verbundenen Verstärkungselementen erfolgen.

Um eine Elastizität der Fluidschlauchstabilisierungsvorrichtung in gewünschter Weise individueller einstellen zu können, beispielsweise abhängig von der Art des Schlauchs und des Reinigungsgeräts, ist es vorteilhaft, wenn die mehreren Verstärkungselemente aus unterschiedlichen Materialien hergestellt sind. Insbesondere können sie aus Materialien mit unterschiedlichen Elastizitätsmodulen hergestellt sein. Durch Austausch eines oder mehrerer Verstärkungselemente durch Verstärkungselemente aus anderen Materialien kann so auf einfache Weise der Elastizitätsmodul der Fluidschlauchstabilisierungsvorrichtung insgesamt in gewünschter Weise eingestellt werden.

Ferner ist es vorteilhaft, wenn die Fluidschlauchstabilisierungsvorrichtung eine Befestigungseinrichtung zum Befestigen der Fluidschlauchstabilisierungsvorrichtung an einem Fluidschlauch eines Reinigungsgeräts umfasst. Mit der Befestigungseinrichtung lässt sich die Fluidschlauchstabilisierungsvorrichtung beispielsweise an Fluidschläuchen von bereits im Einsatz befindlichen Reinigungsgeräten auf einfache Weise befestigen.

Günstig ist es, wenn die Befestigungseinrichtung mindestens ein Befestigungselement zum Befestigen der Fluidschlauchstabilisierungsvorrichtung an einem Fluidschlauch eines Reinigungsgeräts umfasst. Es können selbstverständlich auch mehrere Befestigungselemente vorgesehen sein, um die Fluidschlauchstabilisierungsvorrichtung längs ihrer Erstreckung an einem Fluidschlauch in definierter Weise festzulegen, insbesondere derart, dass noch eine Relativbewegung zwischen dem Fluidschlauch und der Fluidschlauchstabilisierungsvorrichtung möglich ist.

Besonders einfach und kostengünstig ausbilden lässt sich die Fluidschlauchstabilisierungsvorrichtung, wenn das mindestens eine Befestigungselement in Form einer Schelle, eines Kabelbinders oder eines Hüllschlauchs zum Aufnehmen des Fluidschlauchs und der Fluidschlauchstabilisierungsvorrichtung ausgebildet ist. Selbstverständlich sind auch alle weiteren Befestigungsarten denkbar, die dem Fachmann bekannt sind, um die Fluidschlauchstabilisierungsvorrichtung mit dem Fluidschlauch zu verbinden.

Für einen Einsatz der Fluidschlauchstabilisierungsvorrichtung, insbesondere mit einem stationären Reinigungsgerät, ist es vorteilhaft, wenn die Fluidschlauchstabilisierungsvorrichtung und/oder das mindestens eine Verstärkungselement eine Länge in einem Bereich von etwa 1 m bis etwa 3 m aufweisen. Insbesondere kann die Länge in einem Bereich von etwa 1,2 m bis etwa 2 m liegen. Insbesondere kann es sich bei der Länge um eine freie Länge handeln, also ohne den oben beschriebenen Befestigungsabschnitt. Eine freie Länge des mindestens einen Verstärkungselements ist in diesem Fall dann diejenige Länge, längs derer das Verstärkungselement beispielsweise nicht mit dem Reinigungsgerät oder dergleichen gekoppelt und längs derer es frei verformbar ist, insbesondere auf Biegung beanspruchbar.

Besonders kostengünstig und kompakt ausbilden lässt sich die Fluidschlauchstabilisierungsvorrichtung, wenn das mindestens eine Verstärkungselement einen maximalen Durchmesser in einem Bereich von etwa 9 mm bis etwa 20 mm aufweist, insbesondere in einem Bereich von etwa 11 mm bis etwa 15 mm, und wenn das mindestens eine Verstärkungselement einen minimalen Durchmesser in einem Bereich von etwa 2 mm bis etwa 10 mm aufweist, insbesondere in einem Bereich von etwa 3 mm bis etwa 7 mm. Vorzugsweise wird der maximale Durchmesser des Verstärkungselements an einem Ende des Verstärkungselements definiert und der minimale Durchmesser am anderen Ende des Verstärkungselements.

Die eingangs gestellte Aufgabe wird ferner bei einem Fluidschlauch für ein Reinigungsgerät der eingangs beschriebenen Art erfindungsgemäß dadurch gelöst, dass er eine der oben beschriebenen Fluidschlauchstabilisierungsvorrichtungen zum Stabilisieren umfasst.

Ein derart ausgebildeter Fluidschlauch weist dann insbesondere die oben im Zusammenhang mit bevorzugten Ausführungsformen von Fluidschlauchstabilisierungsvorrichtungen beschriebenen Vorteile auf. Ferner kann der Fluidschlauch mit der Fluidschlauchstabilisierungsvorrichtung als Einheit bereits fertig konfektioniert zum Verbinden mit einem Reinigungsgerät geliefert werden.

Vorzugsweise ist der Fluidschlauch in Form eines Saugschlauchs für ein Reinigungsgerät in Form eines Sauggeräts ausgebildet. Man kann den Fluidschlauch somit zum Saugen, beispielsweise zum Aussaugen verschmutzter Kraftfahrzeuge, nutzen.

Ferner ist es günstig, wenn der Fluidschlauch in Form eines Hochdruckschlauchs für ein Reinigungsgerät in Form eines Hochdruckreinigungsgeräts ausgebildet ist. Mit einem solchen Fluidschlauch kann beispielsweise Wasser oder andere Reinigungsflüssigkeit unter Hochdruck zu einem zu reinigenden Gegenstand geleitet werden.

Gemäß einer weiteren bevorzugten Ausführungsform der Erfindung kann vorgesehen sein, dass der Fluidschlauch eine Befestigungseinrichtung zum Festlegen der Fluidschlauchstabilisierungsvorrichtung längs mindestens eines Teils einer Gesamtlänge des Fluidschlauchs umfasst. Beispielsweise lässt sich so der Fluidschlauch mindestens an einer Stelle oder in einem Bereich oder aber auch längs einer gesamten Längserstreckung der Fluidschlauchstabilisierungsvorrichtung mit dieser koppeln oder verbinden.

Besonders einfach ausbilden lässt sich der Fluidschlauch, wenn die Befestigungseinrichtung mindestens ein Befestigungselement zum Festlegen der Fluidschlauchstabilisierungsvorrichtung längs mindestens eines Teils einer Gesamtlänge des Fluidschlauchs umfasst. Es können auch mehrere Befestigungselemente vorgesehen werden, um den Fluidschlauch insbesondere längs einer Gesamterstreckung der Fluidschlauchstabilisierungsvorrichtung an dieser festzulegen.

Günstig ist es, wenn das mindestens eine Befestigungselement am Fluidschlauch derart angeordnet oder ausgebildet ist, dass die Fluidschlauchstabilisierungsvorrichtung mindestens an ihrem freien Ende oder im Bereich ihres freien Endes mit dem Fluidschlauch gekoppelt, geführt oder gar an diesem festgelegt ist. So kann mindestens in einem Bereich oder Abschnitt der Fluidschlauch in definierter Weise mit der Fluidschlauchstabilisierungsvorrichtung verbunden werden. Selbstverständlich kann das mindestens eine Befestigungselement auch derart ausgebildet sein, dass es die Fluidschlauchstabilisierungsvorrichtung vollständig oder zumindest abschnittsweise aufnimmt.

Einfach und kostengünstig ausbilden lässt sich der Fluidschlauch, wenn das mindestens eine Befestigungselement in Form einer Schelle, eines Kabelbinders oder eines Hüllschlauchs zum Aufnehmen des Fluidschlauchs und der Fluidschlauchstabilisierungsvorrichtung ausgebildet ist. Insbesondere kann der Hüllschlauch also die Fluidschlauchstabilisierungsvorrichtung und den Fluidschlauch gemeinsam umgeben. Beispielsweise kann der Hüllschlauch in Form eines Schrumpfschlauchs ausgebildet sein. Dieser kann sich beispielsweise bei Temperaturen über 70°C verformen. Insbesondere ist es vorteilhaft, wenn der Hüllschlauch aus einem UV-beständigen Material ausgebildet ist. Vorzugsweise ist das Material, aus dem der Hüllschlauch ausgebildet ist auch nach dem Aufnehmen des Fluidschlauchs und der Fluidschlauchstabilisierungsvorrichtung hinreichend flexibel, insbesondere nach einem Aufschrumpfen, wenn der Hüllschlauch als Schrumpfschlauch ausgebildet ist. Ferner ist das Material, aus dem der Hüllschlauch ausgebildet ist, vorzugsweise nicht versprödend.

Günstig ist es, wenn das mindestens eine Befestigungselement kraft-, form- oder stoffschlüssig mit dem Fluidschlauch verbunden oder einstückig mit dem Fluidschlauch ausgebildet ist. So kann es je nach Ausgestaltung auf einfache Weise mit dem Fluidschlauch verbunden werden beziehungsweise ermöglicht eine einfache Verbindung des Fluidschlauchs mit der Fluidschlauchstabilisierungsvorrichtung, und zwar insbesondere dann, wenn das Befestigungselement selbst nicht mehr mit dem Fluidschlauch verbunden werden muss, beispielsweise dann, wenn es mit diesem einstückig ausgebildet ist.

Einfach und kostengünstig ausbilden lässt sich der Fluidschlauch, wenn das mindestens eine Befestigungselement an den Fluidschlauch angeformt ist. Beispielsweise kann es durch Anspritzen an den Fluidschlauch angeformt sein. In einem solchen Fall lässt sich dann die Fluidschlauchstabilisierungsvorrichtung einfach durch das mindestens eine Befestigungselement hindurchstecken, um den Fluidschlauch und die Fluidschlauchstabilisierungsvorrichtung miteinander zu koppeln.

Auf besonders einfache Weise lassen sich der Fluidschlauch und die Fluidschlauchstabilisierungsvorrichtung miteinander koppeln oder verbinden, wenn das mindestens eine Befestigungselement in Form einer Aufnahme für die Fluidschlauchstabilisierungsvorrichtung ausgebildet ist. Beispielsweise kann die Aufnahme in Form einer Lasche oder eines Bügels ausgebildet sein, durch die die Fluidschlauchstabilisierungsvorrichtung hindurchführbar ist. So lässt sie sich beispielsweise ähnlich wie ein Gürtel an Gürtelschlaufen einer Hose durch eine oder mehrere Aufnahmen hindurchführen.

Besonders gut geschützt lässt sich die Fluidschlauchstabilisierungsvorrichtung anordnen, wenn die Aufnahme ausgebildet ist zum Aufnehmen der Fluidschlauchstabilisierungsvorrichtung insgesamt. Dies hat auch ästhetische Vorteile, denn die Fluidschlauchstabilisierungsvorrichtung selbst ist so nicht für einen Benutzer sichtbar. Insbesondere kann die Aufnahme am Fluidschlauch angeformt sein, beispielsweise in Form einer seitlich angeformten Tasche, deren Querschnitt im Wesentlichen korrespondierend zu einem Querschnitt der Fluidschlauchstabilisierungsvorrichtung ausgebildet ist.

Vorzugsweise ist die Aufnahme ausgebildet zum Aufnehmen des mindestens einen langgestreckten stabförmigen Verstärkungselements. Insbesondere können beim Vorsehen mehrerer Verstärkungselemente auch mehrere Aufnahmen vorgesehen sein, beispielsweise auf einer Außenseite des Fluidschlauchs und diesen umgebend.

Um möglichst wenig Relativbewegung zwischen dem Fluidschlauch und der Fluidschlauchstabilisierungsvorrichtung zuzulassen, ist es vorteilhaft, wenn die Aufnahme ausgebildet ist zum Aufnehmen eines einzelnen langestreckten stabförmigen Verstärkungselements. So kann insbesondere die Gefahr eines Durchscheuerns des Fluidschlauchs aufgrund von Relativbewegungen des Fluidschlauchs und der Fluidschlauchstabilisierungsvorrichtung relativ zueinander minimiert werden.

Günstigerweise umfasst der Fluidschlauch mehrere Befestigungselemente. Insbesondere können zwei, drei, vier, fünf, sechs, sieben, acht oder mehr Befestigungselemente vorgesehen sein. Diese können insbesondere abhängen von der Anzahl der Verstärkungselemente, aus denen die Fluidschlauchstabilisierungsvorrichtung gebildet ist, oder von einer Länge der Fluidschlauchstabilisierungsvorrichtung.

Um insbesondere eine allseitige Stabilisierung des Fluidschlauchs durch die Fluidschlauchstabilisierungsvorrichtung zu erreichen, ist es vorteilhaft, wenn die mehreren Verstärkungselemente den Fluidschlauch umgebend an diesem festgelegt sind. Beispielsweise können die Verstärkungselemente mit Längsachsen parallel zu einer Längsachse des Fluidschlauchs an diesem festgelegt werden.

Besonders kostengünstig und mit einer gewünschten Flexibilität ausbilden lässt sich der Fluidschlauch, wenn er aus einem Kunststoff hergestellt ist. Insbesondere kann er durch Extrudieren oder Spritzgießen hergestellt sein. Beispielsweise kann er in Form eines Wellschlauchs ausgebildet sein, der durch einen spiralförmigen Stabilisierungsdraht oder durch eine Vielzahl beabstandet zueinander angeordneter Drahtringe stabilisiert ist. So kann insbesondere ein Kollabieren des Schlauchs beim Einsatz mit einem Sauggerät verhindert werden.

Um mit dem Fluidschlauch Vorrichtungen, insbesondere Fahrzeuge, einfach reinigen zu können, ist es vorteilhaft, wenn der Fluidschlauch elastisch verformbar ausgebildet ist. Er kann dann beispielsweise auf einfache Weise in einen Innenraum eines Fahrzeugs hineingeführt werden.

Um insbesondere bei stationären Reinigungsgeräten die Reinigung von Gegenständen, insbesondere Fahrzeugen, möglichst ohne Umstände durchführen zu können, ist es vorteilhaft, wenn der Fluidschlauch eine Länge in einem Bereich von etwa 4 m bis etwa 12 m aufweist. Insbesondere liegt die Länge in einem Bereich von etwa 4,5 m bis etwa 6,5 m oder in einem Bereich von etwa 8 m bis etwa 12 m. Vorzugsweise beträgt sie etwa 5,5 m oder etwa 10 m. Fluidschläuche mit einer Länge in einem Bereich von etwa 4,5 m bis etwa 6,5 eignen sich bevorzugt als Saugschläuche für Sauggeräte. Mit einem solchen Fluidschlauch lässt sich beispielsweise ein Fahrzeug aussaugen, ohne dass es relativ zu einer feststehenden Reinigungsstation mehrfach bewegt werden muss. Fluidschläuche mit einer Länge in einem Bereich von etwa 8 m bis etwa 12, insbesondere mit einer Länge von etwa 10 m, eignen sich bevorzugt als Hochdruckschläuche für Hochdruckreinigungsgeräte.

Die eingangs gestellte Aufgabe wird ferner bei einem Reinigungsgerät der eingangs beschriebenen Art erfindungsgemäß dadurch gelöst, dass es einen der oben beschriebenen Fluidschläuche umfasst.

Ein derart ausgebildetes Reinigungsgerät weist dann insbesondere die bereits oben im Zusammenhang mit bevorzugten Ausführungsformen von Fluidschläuchen und Fluidschlauchstabilisierungsvorrichtungen beschriebenen Vorteile auf.

Günstig ist es, wenn das Reinigungsgerät in Form eines Sauggeräts oder in Form eines Hochdruckreinigungsgeräts ausgebildet ist. Mit einem solchen Reinigungsgerät lässt sich Schmutz absaugen oder mittels Beaufschlagen mit einem Hochdruckreinigungsstrahl entfernen.

Vorteilhafterweise ist das Reinigungsgerät in Form eines stationären Reinigungsgeräts ausgebildet. Es kann dann beispielsweise bei Selbstbedienungsreinigungsanlagen als Sauggerät oder Hochdruckreinigungsgerät eingesetzt werden.

Ferner kann es vorteilhaft sein, wenn das Reinigungsgerät in Form eines mobilen Reinigungsgeräts ausgebildet ist. Insbesondere kann es in Form eines tragbaren oder fahrbaren Reinigungsgeräts ausgebildet sein. Ein solches Reinigungsgerät kann beispielsweise auf einfache Weise an einen anderen Standort gebracht werden. Insbesondere bei mobilen Reinigungsanlagen können derartige Reinigungsgeräte vorteilhaft eingesetzt werden.

Gemäß einer weiteren bevorzugten Ausführungsform der Erfindung kann vorgesehen sein, dass das Reinigungsgerät eine Aufnahme oder Halterung für die Fluidschlauchstabilisierungsvorrichtung und/oder für den Fluidschlauch aufweist. Beispielsweise können getrennte Aufnahmen oder Halterungen für den Fluidschlauch einerseits und die Fluidschlauchstabilisierungsvorrichtung andererseits vorgesehen sein. Dies ermöglicht auf einfache Weise einen Austausch der Fluidschlauchstabilisierungsvorrichtung und des Fluidschlauchs ohne beide Teile austauschen zu müssen. Es kann aber auch nur eine einzelne Aufnahme oder Halterung am Reinigungsgerät vorgesehen sein, um den Fluidschlauch mit einer an diesem gehaltenen Fluidschlauchstabilisierungsvorrichtung mit dem Reinigungsgerät zu verbinden. Dies ist insbesondere vorteilhaft, wenn die Fluidschlauchstabilisierungsvorrichtung insgesamt in einer Aufnahme am Fluidschlauch angeordnet ist.

Vorteilhaft ist es, wenn das Reinigungsgerät ein Gehäuse aufweist und wenn die Aufnahme oder Halterung für die Fluidschlauchstabilisierungsvorrichtung und/oder für den Fluidschlauch am oder im Gehäuse angeordnet oder ausgebildet ist. So lässt sich ein besonders kompaktes Reinigungsgerät ausbilden. Zudem lassen sich freie Enden der Fluidschlauchstabilisierungsvorrichtung und des Fluidschlauchs geschützt innerhalb des Gehäuses mit dem Reinigungsgerät koppeln.

Die nachfolgende Beschreibung bevorzugter Ausführungsformen der Erfindung dient im Zusammenhang mit den Zeichnungen der näheren Erläuterung. Es zeigen:
- Figur 1:: eine schematische Darstellung eines erfindungsgemäßen Reinigungsgeräts mit Fluidschlauch und Fluidschlauchstabilisierungsvorrichtung in einer Grundstellung;
- Figur 2:: eine schematische Darstellung der Anordnung aus Figur 1 in einer Stellung mit ausgelenktem Fluidschlauch;
- Figur 3:: eine schematische Seitenansicht eines Ausführungsbeispiels einer Fluidschlauchstabilisierungsvorrichtung;
- Figur 4:: eine schematische Seitenansicht eines weiteren Ausführungsbeispiels einer Fluidschlauchstabilisierungsvorrichtung;
- Figur 5:: eine schematische Schnittansicht eines Fluidschlauchs und einer mit diesem verbundenen Fluidschlauchstabilisierungsvorrichtung;
- Figur 6:: eine schematische, teilweise geschnittene Seitenansicht eines weiteren Ausführungsbeispiels eines Fluidschlauchs mit daran gekoppelter Fluidschlauchstabilisierungsvorrichtung;
- Figur 7:: eine schematische, teilweise geschnittene Seitenansicht eines weiteren Ausführungsbeispiels eines Fluidschlauchs mit daran gekoppelter Fluidschlauchstabilisierungsvorrichtung;
- Figur 8:: eine schematische, teilweise geschnittene Seitenansicht eines weiteren Ausführungsbeispiels eines Fluidschlauchs mit daran gekoppelter Fluidschlauchstabilisierungsvorrichtung;
- Figur 9:: eine schematische Seitenansicht eines weiteren Ausführungsbeispiels einer Fluidschlauchstabilisierungsvorrichtung;
- Figur 10:: eine schematische Seitenansicht eines weiteren Ausführungsbeispiels einer Fluidschlauchstabilisierungsvorrichtung;
- Figur 11:: eine schematische Schnittansicht eines Fluidschlauchs mit daran gekoppelter Fluidschlauchstabilisierungsvorrichtung;
- Figur 12:: eine schematische, teilweise geschnittene Seitenansicht eines weiteren Ausführungsbeispiels eines Fluidschlauchs mit daran gekoppelter Fluidschlauchstabilisierungsvorrichtung;
- Figur 13:: eine schematische Seitenansicht eines weiteren Ausführungsbeispiels eines Fluidschlauchs mit daran gekoppelter Fluidschlauchstabilisierungsvorrichtung;
- Figur 14:: eine schematische, teilweise geschnittene Seitenansicht eines weiteren Ausführungsbeispiels eines Fluidschlauchs mit daran gekoppelter Fluidschlauchstabilisierungsvorrichtung;
- Figur 15:: eine schematische Schnittansicht eines Fluidschlauchs mit einer Mehrzahl diesen umgebenden Verstärkungselementen;
- Figur 16:: eine schematische Schnittansicht eines Fluidschlauchs mit einer Mehrzahl daran gekoppelter Verstärkungselemente;
- Figur 17:: eine schematische Schnittansicht eines weiteren Ausführungsbeispiels eines Fluidschlauchs mit einer Mehrzahl daran gekoppelter Verstärkungselemente;
- Figur 18:: eine schematische Seitenansicht eines weiteren Ausführungsbeispiels einer Fluidschlauchstabilisierungsvorrichtung umfassend mehrere Verstärkungselemente;
- Figur 19:: eine schematische Seitenansicht eines weiteren Ausführungsbeispiels einer Fluidschlauchstabilisierungsvorrichtung umfassend mehrere Verstärkungselemente;
- Figur 20:: eine schematische Seitenansicht eines weiteren Ausführungsbeispiels einer Fluidschlauchstabilisierungsvorrichtung umfassend mehrere Verstärkungselemente;
- Figur 21:: eine schematische Seitenansicht eines weiteren Ausführungsbeispiels einer Fluidschlauchstabilisierungsvorrichtung mit mehreren Verstärkungselementen;
- Figur 22:: eine schematische Seitenansicht eines weiteren Ausführungsbeispiels einer Fluidschlauchstabilisierungsvorrichtung mit mehreren Verstärkungselementen;
- Figur 23:: eine schematische Seitenansicht eines weiteren Ausführungsbeispiels einer Fluidschlauchstabilisierungsvorrichtung mit mehreren Verstärkungselementen;
- Figur 24:: eine schematische Seitenansicht eines weiteren Ausführungsbeispiels einer Fluidschlauchstabilisierungsvorrichtung mit mehreren Verstärkungselementen;
- Figur 25:: eine schematische Darstellung einer Abhängigkeit der von der Fluidschlauchstabilisierungsvorrichtung ausgeübten Rückzugskraft vom Abstand eines freien Endes des Fluidschlauchs von einem Schlauchaustrittspunkt aus einem Gehäuse des Reinigungsgeräts; und
- Figur 26:: eine schematische Darstellung der Vorgehensweise bei der Messung der in Figur 25 dargestellten Abstands-Abhängigkeit der Rückzugskraft .

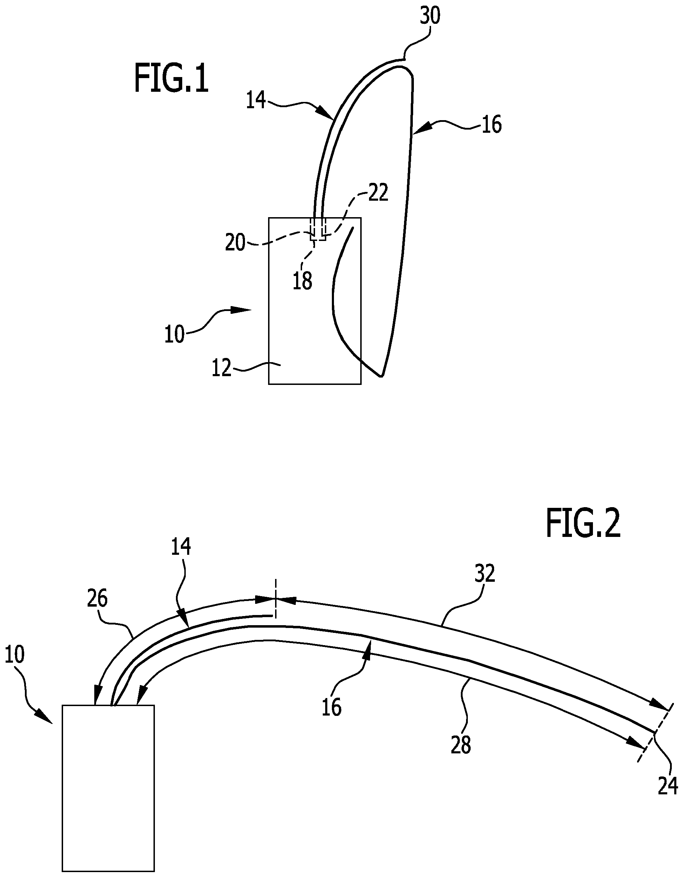

In den Figuren 1 und 2 ist beispielhaft ein insgesamt mit dem Bezugszeichen 10 bezeichnetes Reinigungsgerät dargestellt. Es kann insbesondere in Form eines Sauggeräts oder auch in Form eines Hochdruckreinigungsgeräts ausgebildet sein. Es umfasst ein Gehäuse 12, eine Fluidschlauchstabilisierungsvorrichtung 14 und einen Fluidschlauch 16.

Am Gehäuse 12 ist eine Aufnahme 18 angeordnet, in die ein erstes Ende 20 der Fluidschlauchstabilisierungsvorrichtung 14 sowie ein erstes Ende 22 des Fluidschlauchs 16 eingesetzt ist.

Der Fluidschlauch 16 kann insbesondere als Saugschlauch ausgebildet sein, wenn das Reinigungsgerät 10 in Form eines Sauggeräts ausgebildet ist, oder in Form eines Hochdruckschlauchs, wenn das Reinigungsgerät 10 in Form eines Hochdruckreinigungsgeräts ausgebildet ist.

Ein zweites Ende 24 des Fluidschlauchs 16 kann insbesondere mit einer Saugdüse ausgestattet sein, wenn der Fluidschlauch 16 in Form eines Saugschlauchs ausgebildet ist, oder mit einer Hochdruckpistole, wenn der Fluidschlauch 16 in Form eines Hochdruckschlauchs ausgebildet ist.

Die Fluidschlauchstabilisierungsvorrichtung 14 ist kürzer ausgebildet als der Fluidschlauch 16, insbesondere beträgt eine freie Länge 26 der Fluidschlauchstabilisierungsvorrichtung 14 weniger als die Hälfte, insbesondere weniger als ein Drittel, einer freien Länge 28 des Fluidschlauchs 16. Unter den freien Längen 26 und 28 sind jeweils diejenigen Abmessungen zu verstehen, die die Fluidschlauchstabilisierungsvorrichtung 14 und der Fluidschlauch 16 außerhalb des Gehäuses 12 aufweisen.

Figur 1 zeigt das Reinigungsgerät mit dem Fluidschlauch 16 in einer Grundstellung, in der der Fluidschlauch 16 nicht ausgelenkt ist.

Figur 2 zeigt das Reinigungsgerät 10 in einer Stellung, in welcher der Fluidschlauch 16 nahezu maximal ausgelenkt ist. Die Fluidschlauchstabilisierungsvorrichtung 14, die elastisch biegbar ausgebildet ist, verformt sich dabei in einer vorbestimmten Weise mit. Eine Verformung hängt insbesondere ab von einem Elastizitätsmodul, den die Fluidschlauchstabilisierungsvorrichtung 14 längs ihrer freien Länge aufweist. Ein freies zweites Ende 30 der Fluidschlauchstabilisierungsvorrichtung 14 wird, insbesondere deswegen, weil es mit dem Fluidschlauch 16 verbunden oder gekoppelt ist, ebenfalls vom Gehäuse 12 weggezogen.

In den Figuren 1 und 2 ist eine Verbindung des Fluidschlauchs 16 und der Fluidschlauchstabilisierungsvorrichtung 14 der Übersichtlichkeit wegen nicht dargestellt. Mögliche Formen der Verbindung zwischen dem Fluidschlauch 16 und der Fluidschlauchstabilisierungsvorrichtung 14 sind nachfolgend noch im Einzelnen beschrieben.

Die freie Länge 26 beträgt vorzugsweise in einem Bereich von etwa 1 m bis etwa 2 m. Insbesondere kann sie in einem Bereich von etwa 1,3 m bis etwa 1,6 m liegen. Beispielsweise kann die freie Länge 26 1,4 m betragen.

Die freie Länge 28 liegt vorzugsweise in einem Bereich von etwa 4,5 m bis etwa 6,5 m. Vorzugsweise liegt sie in einem Bereich von etwa 5 m bis etwa 6 m. Insbesondere kann die freie Länge 28 etwa 5,5 m betragen.

Die freien Längen 26 und 28 in den angegebenen Bereichen zu wählen, ermöglicht es insbesondere, ein Kraftfahrzeug neben dem Reinigungsgerät 10 abzustellen und den Fluidschlauch 16 mit dem zweiten Ende 24 an nahezu jede beliebige Stelle des Fahrzeugs zu bewegen.

Wird eine Zugkraft, die auf das zweite Ende 24 ausgeübt wird, wieder zurückgenommen, entspannt sich die ausgelenkte Fluidschlauchstabilisierungsvorrichtung 14 und geht automatisch wieder in die in Figur 1 dargestellte Grundstellung zurück. Der Fluidschlauch 16 hängt dann wiederum auf einer Restlänge 32, die einer Differenz zwischen den freien Längen 28 und 26 entspricht, wieder vom zweiten Ende 30 der Fluidschlauchstabilisierungsvorrichtung 14 herunter.

Durch die Fluidschlauchstabilisierungsvorrichtung 14 kann der Fluidschlauch 16 in möglichst kompakter Weise am Reinigungsgerät 10 gehalten werden, wenn der Fluidschlauch 16 nicht benötigt wird. Ferner ermöglicht es die Fluidschlauchstabilisierungsvorrichtung 14, den Fluidschlauch 16 nach einer Benutzung wieder automatisch in eine möglichst kompakte Grundstellung zurückzuführen.

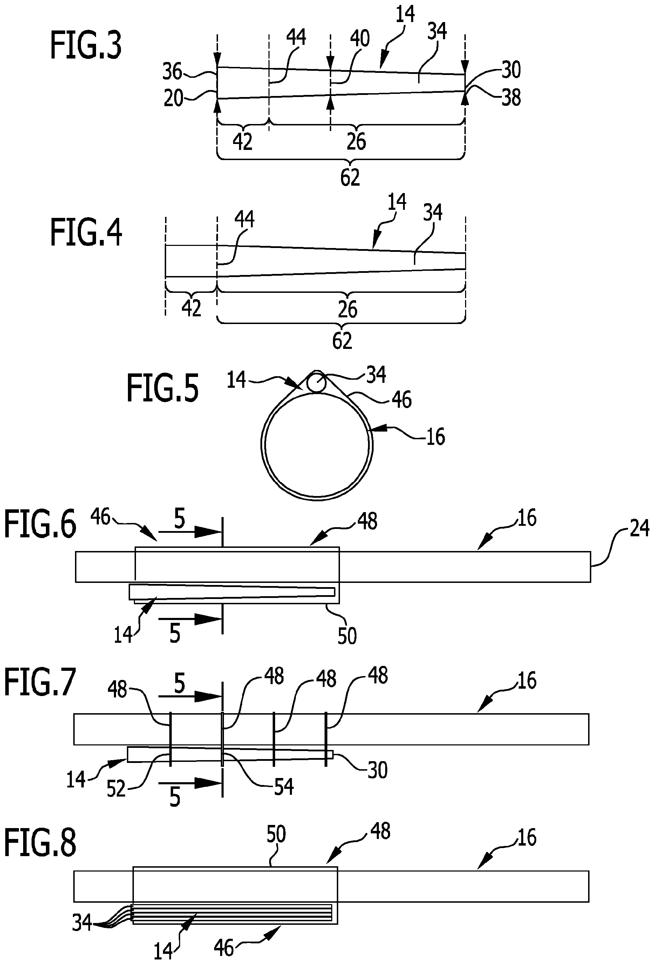

In Figur 3 ist schematisch eine Seitenansicht eines Ausführungsbeispiels einer Fluidschlauchstabilisierungsvorrichtung 14 dargestellt. Es umfasst ein einziges langgestrecktes, stabförmiges und elastisch biegbares Verstärkungselement 34, welches insgesamt konisch geformt ist. Ein maximaler Durchmesser 36 des Verstärkungselements 34 wird durch das erste Ende 20 definiert, ein minimaler Durchmesser 38 durch das zweite Ende 30. Zwischen den Enden 20 und 30 nimmt ein Durchmesser 40 des Verstärkungselements 34 kontinuierlich ab.

Ausgehend vom ersten Ende 20 erstreckt sich ein Befestigungsabschnitt 42 in Richtung auf das zweite Ende 30 hin. Eine Länge des Befestigungsabschnitts 42 entspricht etwa einer Tiefe der Aufnahme 18. Ein erstes Ende des Befestigungsabschnitts 42 wird durch das erste Ende 20 definiert, ein zweites Ende 44 ist vom zweiten Ende 30 um die freie Länge 26 beabstandet.

Durch den ausgehend vom ersten Ende 20 zum zweiten Ende 30 hin abnehmenden Durchmesser 40 weist das Verstärkungselement 34 und damit auch die Fluidschlauchstabilisierungsvorrichtung 14 ausgehend vom ersten Ende 20 in Richtung auf das zweite Ende 30 hin einen Vorrichtungsabschnitt 62 mit einem abnehmenden Elastizitätsmodul auf. Dies hat zur Folge, dass bei Ausübung einer Zugkraft auf das zweite Ende 24 des Fluidschlauchs 16 zunächst die Fluidschlauchstabilisierungsvorrichtung 14 ausgehend vom zweiten Ende 30 verformt wird, da ausgehend vom zweiten Ende 30 in Richtung auf das erste Ende 20 hin der Elastizitätsmodul der Fluidschlauchstabilisierungsvorrichtung 14 zunimmt. Damit verformt sich die Fluidschlauchstabilisierungsvorrichtung 14 bei Ausübung einer Zugkraft auf das zweite Ende 24 nicht gleichförmig, sondern besonders stark ausgehend vom zweiten Ende 30 und immer weniger stark in Richtung auf das erste Ende 20 hin.

Im Bereich des Befestigungsabschnitts 42 findet praktisch keine Verformung statt, da dieser am Reinigungsgerät 10 im Wesentlichen unverformbar gehalten ist. Eine Verformung der Fluidschlauchstabilisierungsvorrichtung 14 erfolgt dann nur im Bereich ihrer freien Länge 26, und zwar in der beschriebenen Weise.

In Figur 4 ist ein weiteres Ausführungsbeispiel einer Fluidschlauchstabilisierungsvorrichtung 14 schematisch von der Seite aus dargestellt. Es unterscheidet sich von der in Figur 3 dargestellten Fluidschlauchstabilisierungsvorrichtung 14 lediglich dadurch, dass das Verstärkungselement 34 einen Befestigungsabschnitt 42 mit einem konstanten Durchmesser aufweist. Der Elastizitätsmodul des Fluidschlauchstabilisierungsvorrichtung 14 nimmt also im Bereich des Vorrichtungsabschnitts 62, der sich ausgehend vom Ende 30 auf der Länge 26 erstreckt, ausgehend vom Ende 30 zum Ende 44 hin zu.

Bei dem in Figur 3 dargestellten Ausführungsbeispiel nimmt der Durchmesser des Befestigungsabschnitts 42 ausgehend vom ersten Ende 20 kontinuierlich ab.

Figur 6 zeigt schematisch einen Fluidschlauch 16, der von einer Fluidschlauchstabilisierungsvorrichtung 14 stabilisiert ist. Diese ist mit dem Fluidschlauch verbunden durch eine insgesamt mit dem Bezugszeichen 46 bezeichnete Befestigungseinrichtung. Diese umfasst ein Befestigungselement 48 in Form eines Hüllschlauchs 50.

Der Hüllschlauch 50 umgibt, wie in der schematischen Querschnittsansicht in Figur 5 dargestellt, sowohl den Fluidschlauch 16 als auch die an diesem anliegende Fluidschlauchstabilisierungsvorrichtung 14, die ein einzelnes Verstärkungselement 34 umfasst. Der Hüllschlauch 50 weist eine Länge auf, die in etwa der freien Länge 26 entspricht. Der Hüllschlauch 50 kann insbesondere in Form eines Schrumpfschlauchs ausgebildet sein, welcher in einem Grundzustand über den Fluidschlauch 16 sowie die Fluidschlauchstabilisierungsvorrichtung 14 geschoben und dann durch Erwärmen geschrumpft wird.

Figur 7 zeigt eine alternative Variante der Verbindung des Fluidschlauchs 16 mit der Fluidschlauchstabilisierungsvorrichtung 14. Statt des Hüllschlauchs 50 sind beispielhaft vier Befestigungselemente 48 in Form von Schellen 52 oder Kabelbindern 54 dargestellt. Diese verbinden insbesondere die Fluidschlauchstabilisierungsvorrichtung 14 im Bereich ihres zweiten Endes 30 mit dem Fluidschlauch 16 sowie in regelmäßigen Abständen in Richtung auf das erste Ende 20 hin.

Bei dem in Figur 8 dargestellten Ausführungsbeispiel ist die Fluidschlauchstabilisierungsvorrichtung 14 durch mehrere Versteifungselemente 34 gebildet. Diese sind bündelartig aneinander anliegend mit dem Fluidschlauch 16 durch einen Hüllschlauch 50 verbunden. Die Verstärkungselemente 34 können insbesondere in einer Form ausgebildet sein, wie sie in Verbindung mit den Figuren 3 und 4 im Einzelnen erläutert wurde.

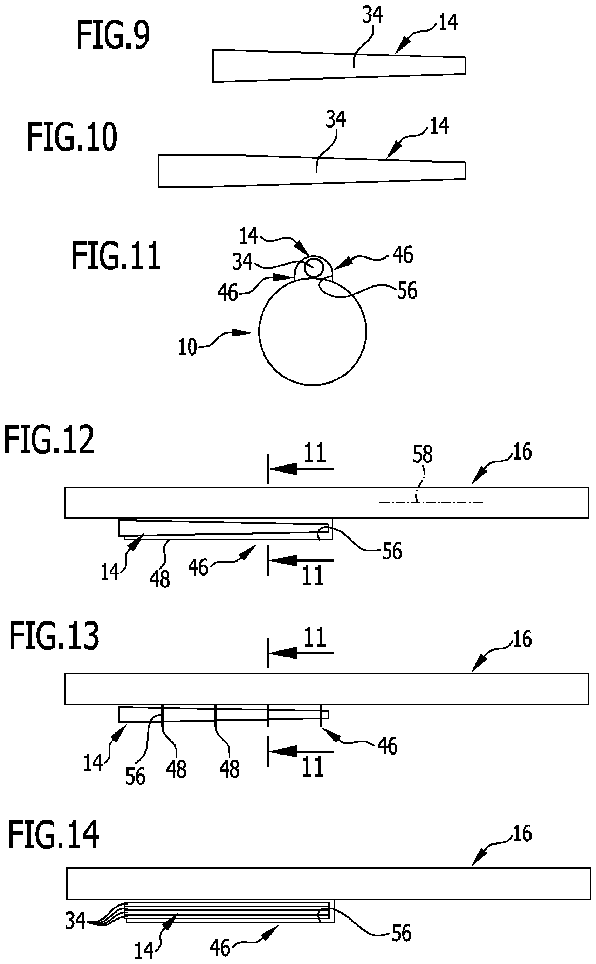

Figur 9 zeigt nochmals eine Fluidschlauchstabilisierungsvorrichtung 14, wie sie bereits in Verbindung mit Figur 3 eingehend beschrieben wurde.

Figur 10 nochmals eine Fluidschlauchstabilisierungsvorrichtung, wie sie in Verbindung mit Figur 4 bereits erläutert wurde.

Figur 12 zeigt nun ein Ausführungsbeispiel eines Fluidschlauchs 16, an welchem eine Befestigungseinrichtung 46 seitlich angeformt wurde, und zwar in Form eines Befestigungselements 48, welches als seitliche Aufnahme 56 ausgebildet ist, in die die Fluidschlauchstabilisierungsvorrichtung 14 parallel zu einer Längsachse 58 des unverformten Fluidschlauchs 16 eingeschoben werden kann. Hierzu ist die Aufnahme 56 in Richtung auf das erste Ende 22 hin geöffnet. Ein gegenüberliegendes Ende der Aufnahme 56 ist optional verschlossen.

Figur 11 zeigt beispielhaft einen Schnitt längs Linie 11-11 in Figur 12. Hier ist gut zu erkennen, dass das Verstärkungselement 34 außerhalb des Fluidschlauchs 16, jedoch innerhalb der Aufnahme 56, angeordnet ist.

Figur 13 zeigt beispielhaft eine Ausgestaltung der Befestigungseinrichtung 46, die vier an den Fluidschlauch 16 angeformte oder einstückig mit diesem ausgebildete Befestigungselemente 48 umfasst, welche in Form von Laschen oder Ösen ausgebildet sind und jeweils eine Durchbrechung in Form einer Aufnahme 56 definieren. Eine Schnittansicht längs Linie 11-11 in Figur 13 im Bereich eines der Befestigungselemente 48 entspricht der in Figur 11 schematisch dargestellten Schnittansicht.

In Figur 14 ist wiederum eine Fluidschlauchstabilisierungsvorrichtung 14 schematisch dargestellt, die mehrere Verstärkungselemente 34 umfasst. Diese sind in die Aufnahme 56, die durch die Befestigungseinrichtung 46 definiert wird, eingeschoben.

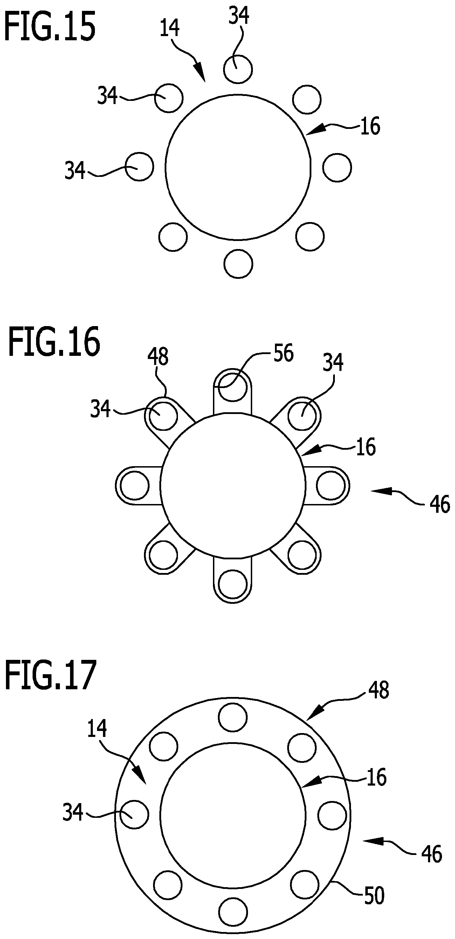

In Figur 15 ist schematisch ein weiteres Ausführungsbeispiel eines Fluidschlauchs 16 dargestellt, welcher mit einer Fluidschlauchstabilisierungsvorrichtung 14 stabilisiert ist, die mehrere Verstärkungselemente 34 umfasst, die gleichförmig über einen Umfang des Fluidschlauchs 16 verteilt und parallel zu diesem ausgerichtet angeordnet sind. Figur 15 zeigt beispielhaft acht Verstärkungselemente 34. Diese können insbesondere wie in den Figuren 3 und 4 dargestellt und oben beschrieben ausgebildet sein.

Figur 16 zeigt eine erste Variante einer Befestigungseinrichtung 46 zum Verbinden der in Figur 15 dargestellten Anordnung der Fluidschlauchstabilisierungsvorrichtung 14 mit dem Fluidschlauch 16. Die Befestigungseinrichtung 46 umfasst für jedes Verstärkungselement 34 ein Befestigungselement 48 in Form einer Aufnahme 56, wie sie in Verbindung mit den Figuren 12 und 14 beschrieben wurde.

Alternativ kann statt einer solchen langgestreckten Aufnahme 56 auch eine Mehrzahl von Befestigungselementen in Form von Laschen oder Ösen, wie in Figur 13 dargestellt und oben beschrieben, zum Einsatz kommen.

In Figur 17 ist eine weitere Variante zum Verbinden der in Figur 14 dargestellten Fluidschlauchstabilisierungsvorrichtung 14 mit dem Fluidschlauch 16 beispielhaft dargestellt. Hier umfasst die Befestigungseinrichtung 46 ein einziges Befestigungselement in Form eines Hüllschlauchs 50. Dieser umgibt den Fluidschlauch 16 und die diesen umgebenden Verstärkungselemente 34.

Statt des Hüllschlauchs 50 können auch mehrere Befestigungselemente 48 vorgesehen werden, und zwar in einer Art, wie in Verbindung mit Figur 7 beschrieben. Die Befestigungselemente 48 können insbesondere in Form eines Kabelbinders oder einer Schelle die einzelnen Verstärkungselemente 34 mit dem Fluidschlauch 16 verbinden.

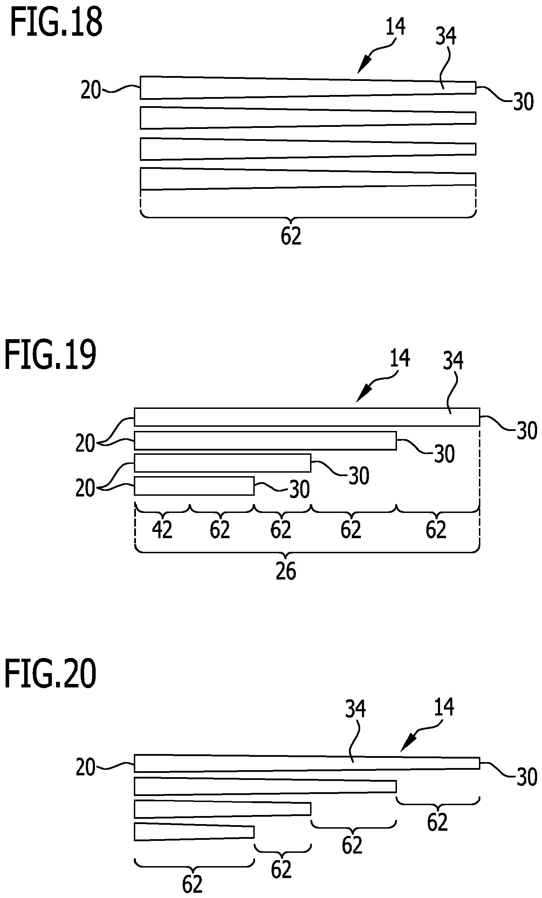

In Figur 18 ist beispielhaft eine Fluidschlauchstabilisierungsvorrichtung 14 dargestellt, die durch mehrere, beispielhaft dargestellt sind vier, Verstärkungselemente 34 gebildet ist. Hier kann auch jede beliebig andere Anzahl an Verstärkungselementen 34 vorgesehen sein. Dies gilt entsprechend auch für die in den Figuren 8 sowie 14 bis 17 und 19 bis 24 dargestellten Ausführungsbeispiele von Fluidschlauchstabilisierungsvorrichtungen 14.

In Figur 18 sind die Versteifungselemente 34 ausgebildet in Form von Versteifungselementen, wie sie eingehend in Verbindung mit Figur 3 beschrieben wurden. Werden diese gekoppelt, beispielsweise auch wie in Verbindung mit den Figuren 15 bis 17 beschrieben, ergibt sich ein ausgehend von den Enden 20 in Richtung auf die Enden 30 hin insgesamt abnehmender Elastizitätsmodul der Fluidschlauchstabilisierungsvorrichtung 14.

In Figur 19 ist eine weitere Variante einer Fluidschlauchstabilisierungsvorrichtung 14 schematisch dargestellt. Sie umfasst vier Verstärkungselemente 34, deren Enden 20 ein gemeinsames Ende der Fluidschlauchstabilisierungsvorrichtung 14 definieren. Die Verstärkungselemente 34 sind jedoch unterschiedlich lang, sodass im Bereich der freien Länge 26 der Fluidschlauchstabilisierungsvorrichtung 14 das Elastizitätsmodul derselben in drei Stufen abnimmt, sodass insgesamt vier verschiedene Bereiche, nämlich vier Vorrichtungsabschnitte 62 der Fluidschlauchstabilisierungsvorrichtung 14, mit unterschiedlichem Elastizitätsmodul ausgebildet werden. Es handelt sich dabei jeweils um die Abschnitte der Verstärkungselemente 34, die über ein zweites Ende 30 des nächst kürzeren Verstärkungselements 34 hinausragen. Die einzelnen Verstärkungselemente 34 sind in Form von biegbaren Stäben mit identischem Querschnitt ausgebildet.

Figur 20 zeigt eine abgewandelte Variante der Anordnung aus Figur 19. Hier sind jedoch die Verstärkungselemente 34 in Form von Verstärkungselementen ausgebildet, wie sie in Figur 3 dargestellt und oben beschrieben sind. Damit ergibt sich eine überlagerte Änderung des Elastizitätsmoduls der Fluidschlauchstabilisierungsvorrichtung 14 derart, dass er sowohl kontinuierlich abnimmt als auch abgestuft, also eine Kombination der Ausgestaltung der Fluidschlauchstabilisierungsvorrichtungen 14, wie sie in den Figuren 18 und 19 dargestellt und oben beschrieben wurde.

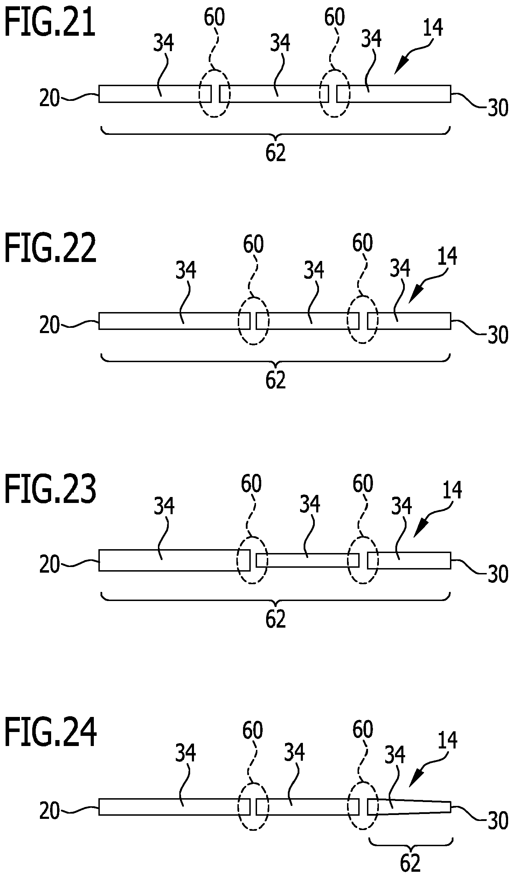

In den Figuren 21 bis 24 sind weitere Ausführungsbeispiele von Fluidschlauchstabilisierungsvorrichtungen 14 schematisch dargestellt, die jeweils mehrere Verstärkungselemente 34 umfassen. In den Figuren 21 bis 24 sind beispielhaft drei Verstärkungselemente 34 dargestellt.

In Figur 21 sind die drei Verstärkungselemente 34, wie auch in den Figuren 22 bis 24 dargestellt, hintereinander angeordnet und bilden also gemeinsam einen Stab aus. Sie sind über schematisch dargestellte Kopplungselemente 60 miteinander verbunden. Die Kopplungselemente 60 können elastisch ausgebildet sein und eine unterschiedliche Elastizität aufweisen, so dass insgesamt für die dargestellten Fluidschlauchstabilisierungsvorrichtungen 14 wieder sich ändernde Elastizitätsmodule zwischen den Enden 20 und 30 vorgegeben werden.

Bei dem in Figur 21 dargestellten Ausführungsbeispiel der Fluidschlauchstabilisierungsvorrichtung 14 sind alle drei Verstärkungselemente 34 gleich lang und weisen einen identischen Durchmesser auf. Allerdings können diese Verstärkungselemente 34 optional aus unterschiedlichen Materialien mit jeweils unterschiedlichen Elastizitätsmodulen ausgebildet sein. So ergibt sich wiederum eine Fluidschlauchverstärkungsvorrichtung 14 mit einem Vorrichtungsabschnitt 62, der durch die Gesamtanordnung der drei Verstärkungselemente 34 definiert wird, der einen sich in zwei Stufen ändernden Elastizitätsmodul aufweist.

Die Fluidschlauchstabilisierungsvorrichtung 14, wie sie beispielhaft in Figur 22 dargestellt ist, weist unterschiedlich lange Verstärkungselemente 34 auf.

Dagegen ist die in Figur 23 schematisch dargestellte Fluidschlauchstabilisierungsvorrichtung 14 aus drei Verstärkungselementen 34 ausgebildet, die zwar dieselbe Länge aufweisen wie die Verstärkungselemente in Figur 22, jedoch unterschiedliche Durchmesser und damit auch unterschiedliche Elastizitätsmodulen.

Beispielhaft ist in Figur 24 die Fluidschlauchstabilisierungsvorrichtung 14 mit drei Verstärkungselementen 34 dargestellt, die identische Längen aufweisen wie die Verstärkungselemente 34 in den Figuren22 und 23, doch ist eines der drei Verstärkungselemente 34 ausgebildet in Form eines in Figur 3 dargestellten Verstärkungselements 34. Damit nimmt Elastizitätsmodul der Gesamtanordnung der Fluidschlauchstabilisierungsvorrichtung 14 ausgehend vom Ende 20 zum Ende 30 hin zweimal in Stufen und längs des dritten Verstärkungselements 34, das einen Vorrichtungsabschnitt 62 definiert, zudem kontinuierlich ab.

Die in den Figuren 21 bis 24 dargestellten Fluidschlauchstabilisierungsvorrichtungen 14 können beliebig die Verstärkungselemente 34, wie sie in den Figuren 3 bis 20 dargestellt und oben beschrieben wurden, ersetzen.

Selbstverständlich sind auch weitere, nicht dargestellte Kombinationen der in den Figuren dargestellten und oben beschriebenen Anordnungen von Verstärkungselementen 34 zur Ausbildung von Fluidschlauchstabilisierungsvorrichtungen 14 zur Stabilisierung von Fluidschläuchen 16 möglich.

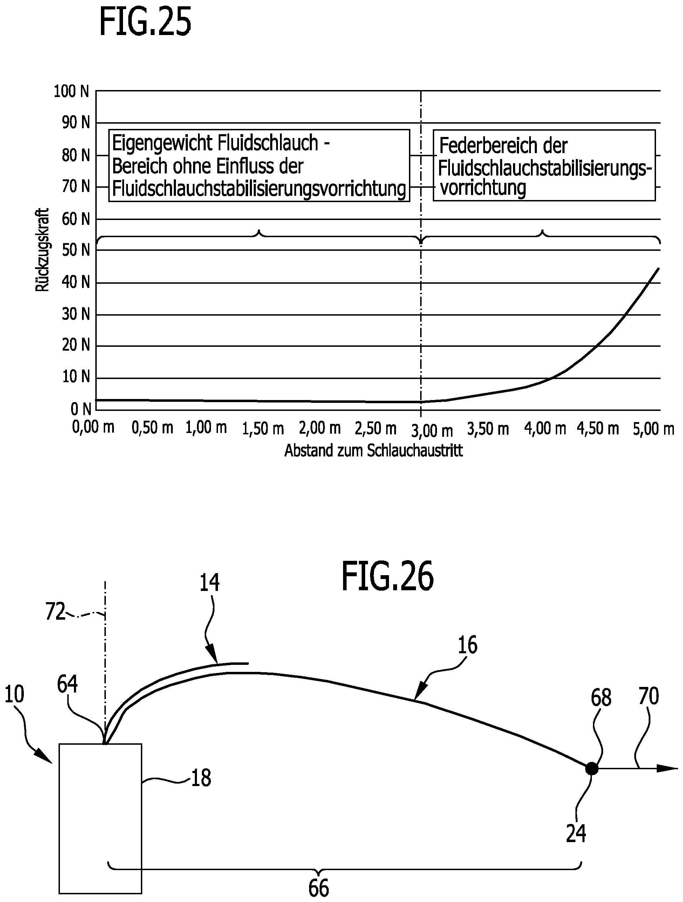

In Figur 25 ist schematisch dargestellt, wie die Rückzugskraft der Fluidschlauchstabilisierungsvorrichtung 14 von einem Abstand des Endes 24 von einem Austrittspunkt 64 der Fluidschlauchstabilisierungsvorrichtung 14 aus dem Gehäuse 12 abhängt. Der Fluidschlauch 16 weist hier eine Länge von insgesamt 5,5 m auf.

Der Kraftverlauf in Abhängigkeit des Abstands 66 ist in Figur 25 dargestellt und zeigt eine im Wesentlichen konstante Rückzugskraft bis zu einer Auslenkung mit einem Abstand von etwa 3 m. Danach steigt die Rückzugskraft kontinuierlich, jedoch nichtlinear an.

Die in Figur 25 aufgetragenen Kräfte wurden mit einem Kraftaufnehmer 68 bestimmt. Die gemessene Rückzugskraft wirkt der Auslenkkraft 70 entgegen. Diese ist quer zu einer Austrittslängsachse 72 der Aufnahme 18 gerichtet.

Für eine in der Praxis gut beherrschbare Anordnung aus einem Fluidschlauch 16 und einer Fluidschlauchstabilisierungsvorrichtung 14 liegt somit eine Rückzugskraft vorzugsweise in einem Bereich zwischen 1 N und 100 N, vorzugsweise in einem Bereich zwischen etwa 1 N und 60 N.

Die beschriebenen Varianten von Fluidschläuchen sind vorzugsweise aus Materialien ausgebildet, die für die Medien, die durch sie geleitet werden sollen, geeignet sind. Insbesondere können säure- und basenresistente Kunststoffe zur Ausbildung der Fluidschläuche 16 gewählt werden.

Die Verstärkungselemente 34 sind vorzugsweise aus einem Kunststoff gebildet, der mit Glasfasern oder mit Kohlenstofffasern verstärkt ist.

Wie beschrieben ergibt sich die einfachste Ausgestaltung der Fluidschlauchstabilisierungsvorrichtung 14 durch Einsatz eines einzigen Verstärkungselements 34, wie es beispielsweise in den Figuren 3 oder 4 dargestellt ist.

### Bezugszeichenliste

- 10: Reinigungsgerät
- 12: Gehäuse
- 14: Fluidschlauchstabilisierungsvorrichtung
- 16: Fluidschlauch
- 18: Aufnahme
- 20: erstes Ende
- 22: erstes Ende
- 24: zweites Ende
- 26: freie Länge
- 28: freie Länge
- 30: zweites Ende
- 32: Restlänge
- 34: Verstärkungselement
- 36: maximaler Durchmesser
- 38: minimaler Durchmesser
- 40: Durchmesser
- 42: Befestigungsabschnitt
- 44: zweites Ende
- 46: Befestigungseinrichtung
- 48: Befestigungselement
- 50: Hüllschlauch
- 52: Schelle
- 54: Kabelbinder
- 56: Aufnahme
- 58: Längsachse
- 60: Kopplungselement
- 62: Vorrichtungsabschnitt
- 64: Austrittspunkt
- 66: Abstand
- 68: Kraftaufnahme
- 70: Auslenkkraft
- 72: Austrittslängsachse

## Patentansprüche

1. Fluidschlauchstabilisierungsvorrichtung (14) zum Stabilisieren eines Fluidschlauchs (16) eines Reinigungsgeräts (10), wobei die Fluidschlauchstabilisierungsvorrichtung (14) mindestens einen Vorrichtungsabschnitt (62) mit einem ersten und einem zweiten Ende (20, 30) aufweist, wobei der Vorrichtungsabschnitt (62) einen Elastizitätsmodul aufweist, wobei sich der Elastizitätsmodul ausgehend vom ersten Ende (20) in Richtung auf das zweite Ende (30) des Vorrichtungsabschnitts (62) hin ändert, wobei die Fluidschlauchstabilisierungsvorrichtung (14) mindestens ein langgestrecktes, stabförmiges und elastisch biegbares Verstärkungselement (34) umfasst und wobei das mindestens eine Verstärkungselement (34) mindestens teilweise oder abschnittsweise den Vorrichtungsabschnitt (62) bildet, wobei sich der Elastizitätsmodul zwischen dem ersten und dem zweiten Ende (20, 30) mindestens abschnittsweise kontinuierlich und/oder in mindestens einer Stufe ändert, wobei der Elastizitätsmodul des Vorrichtungsabschnitts (62) zwischen dem ersten und dem zweiten Ende (20, 30) abnimmt und wobei die Fluidschlauchstabilisierungsvorrichtung (14) einen Befestigungsabschnitt (42) zum Festlegen oder Befestigen an einem Reinigungsgerät (10) aufweist.

2. Fluidschlauchstabilisierungsvorrichtung nach Anspruch 1, **dadurch gekennzeichnet, dass** das mindestens eine langgestreckte Verstärkungselement (34) aus einem nicht verstärkten Kunststoff oder einem nicht faserverstärkten Kunststoff oder einem mit Glasfasern oder Kohlenstofffasern verstärkten Kunststoff oder aus mindestens einer Blattfeder hergestellt oder ausgebildet ist.

3. Fluidschlauchstabilisierungsvorrichtung nach einem der voranstehenden Ansprüche, **dadurch gekennzeichnet, dass**
a) sich der Befestigungsabschnitt (42) ausgehend von einem ersten Ende (20) der Fluidschlauchstabilisierungsvorrichtung (14) erstreckt
und/oder
b) der Befestigungsabschnitt (42) ein erstes Ende (20) und ein zweites Ende (44) aufweist und dass ein Elastizitätsmodul des Befestigungsabschnitts (42) längs seiner Erstreckung von seinem ersten zu seinem zweiten Ende (20, 44) konstant oder im Wesentlichen konstant ist.

4. Fluidschlauchstabilisierungsvorrichtung nach einem der voranstehenden Ansprüche, **dadurch gekennzeichnet, dass** die Fluidschlauchstabilisierungsvorrichtung (14) mehrere langgestreckte, stabförmige und elastisch biegbare Verstärkungselemente (34) umfasst.

5. Fluidschlauchstabilisierungsvorrichtung nach Anspruch 4, **dadurch gekennzeichnet, dass**
a) die mehreren Verstärkungselemente (34) jeweils eine unterschiedliche Länge aufweisen
und/oder
b) mindestens eines der mehreren Verstärkungselemente (34) einen konstanten Querschnitt längs seiner Erstreckung aufweist
und/oder
c) mindestens eines der mehreren Verstärkungselemente (34) einen konstanten Elastizitätsmodul längs seiner Erstreckung aufweist.

6. Fluidschlauchstabilisierungsvorrichtung nach einem der voranstehenden Ansprüche, **dadurch gekennzeichnet, dass** das mindestens eine Verstärkungselement (34) oder mindestens eines der mehreren Verstärkungselemente (34)
a) einen abnehmenden Querschnitt längs seiner Erstreckung aufweist, insbesondere einen kontinuierlich und/oder in mindestens einer Stufe abnehmenden Querschnitt,
und/oder
b) ein erstes Ende (20) und ein zweites Ende (30) aufweist und dass sich ein Elastizitätsmodul ausgehend vom ersten Ende (20) in Richtung auf das zweite Ende (30) hin ändert, insbesondere kontinuierlich und/oder in mindestens einer Stufe,
wobei insbesondere der Elastizitätsmodul des mindestens einen Verstärkungselements (34) oder des mindestens einen der mehreren Verstärkungselemente (34) zwischen dem ersten und dem zweiten Ende abnimmt.

7. Fluidschlauchstabilisierungsvorrichtung nach einem der Ansprüche 4 bis 6, **dadurch gekennzeichnet, dass** die mehreren Verstärkungselemente (34)
a) voneinander getrennt ausgebildet sind
und/oder
b) bündelartig zur Ausbildung der Fluidschlauchstabilisierungsvorrichtung (14) miteinander verbunden oder gekoppelt sind
und/oder
c) derart angeordnet sind, dass ein erstes Ende (20) der Fluidschlauchstabilisierungsvorrichtung (14) durch mindestens ein erstes Ende (20) eines der mehreren Verstärkungselemente (34) definiert ist, insbesondere durch alle ersten Enden (20) der mehreren Verstärkungselemente (34),
und/oder
d) derart angeordnet sind, dass ein zweites Ende (30) der Fluidschlauchstabilisierungsvorrichtung (14) durch mindestens ein zweites Ende (30) der mehreren Verstärkungselemente (34) definiert ist, insbesondere durch alle zweiten Enden (30) der mehreren Verstärkungselemente (34),
und/oder
e) hintereinander angeordnet sind derart, dass sich ihre jeweiligen Einzellängen zu einer Gesamtlänge addieren
und/oder
f) aus unterschiedlichen Materialien hergestellt sind, insbesondere aus Materialien mit unterschiedlichen Elastizitätsmodulen.

8. Fluidschlauchstabilisierungsvorrichtung nach einem der voranstehenden Ansprüche, **dadurch gekennzeichnet, dass**
a) die Fluidschlauchstabilisierungsvorrichtung eine Befestigungseinrichtung (46) zum Befestigen der Fluidschlauchstabilisierungsvorrichtung (14) an einem Fluidschlauch (16) eines Reinigungsgeräts (10) umfasst,
wobei insbesondere die Befestigungseinrichtung (46) mindestens ein Befestigungselement (48) zum Befestigen der Fluidschlauchstabilisierungsvorrichtung (14) an einem Fluidschlauch (16) eines Reinigungsgeräts (10) umfasst,
wobei weiter insbesondere das mindestens eine Befestigungselement (48) in Form einer Schelle (52), eines Kabelbinders (54) oder eines Hüllschlauchs (50) zum Aufnehmen des Fluidschlauchs (16) und der Fluidschlauchstabilisierungsvorrichtung (14) ausgebildet ist,
und/oder
b) das mindestens eine Verstärkungselement (34) eine Länge, insbesondere eine freie Länge (26) ohne Befestigungsabschnitt (42), in einem Bereich von etwa 1 m bis etwa 3 m aufweist, insbesondere in einem Bereich von etwa 1,2 m bis etwa 2 m,
und/oder
c) das mindestens eine Verstärkungselement (34) einen maximalen Durchmesser in einem Bereich von etwa 9 mm bis etwa 20 mm aufweist, insbesondere in einem Bereich von etwa 11 mm bis etwa 15 mm, und dass das mindestens eine Verstärkungselement (34) einen minimalen Durchmesser in einem Bereich von etwa 2 mm bis etwa 10 mm aufweist, insbesondere in einem Bereich von etwa 3 mm bis etwa 7 mm.

9. Fluidschlauch (16) für ein Reinigungsgerät, **gekennzeichnet durch** eine Fluidschlauchstabilisierungsvorrichtung (14) nach einem der voranstehenden Ansprüche zum Stabilisieren des Fluidschlauchs (16).

10. Fluidschlauch nach Anspruch 9, **dadurch gekennzeichnet, dass** der Fluidschlauch (16)
a) in Form eines Saugschlauchs für ein Reinigungsgerät (10) in Form eines Sauggeräts oder in Form eines Hochdruckschlauchs für ein Reinigungsgerät (10) in Form eines Hochdruckreinigungsgeräts ausgebildet ist
und/oder
b) eine Befestigungseinrichtung (46) zum Festlegen der Fluidschlauchstabilisierungsvorrichtung (14) längs mindestens eines Teils einer Gesamtlänge des Fluidschlauchs (16) umfasst.

11. Fluidschlauch nach Anspruch 9 oder 10, **dadurch gekennzeichnet, dass**
der Fluidschlauch (16) eine Befestigungseinrichtung (46) zum Festlegen der Fluidschlauchstabilisierungsvorrichtung (14) längs mindestens eines Teils einer Gesamtlänge des Fluidschlauchs (16) umfasst,
wobei insbesondere die Befestigungseinrichtung (46) mindestens ein Befestigungselement (48) zum Festlegen der Fluidschlauchstabilisierungsvorrichtung (14) längs mindestens eines Teils einer Gesamtlänge des Fluidschlauchs (16) umfasst.

12. Fluidschlauch nach Anspruch 11, **dadurch gekennzeichnet, dass** die Befestigungseinrichtung (46) mindestens ein Befestigungselement (48) zum Festlegen der Fluidschlauchstabilisierungsvorrichtung (14) längs mindestens eines Teils einer Gesamtlänge des Fluidschlauchs (16) umfasst und dass
a) das mindestens eine Befestigungselement (48) am Fluidschlauch (16) derart angeordnet und ausgebildet ist, dass die Fluidschlauchstabilisierungsvorrichtung (14) mindestens an ihrem freien Ende (30) oder im Bereich ihres freien Endes (30) mit dem Fluidschlauch (16) gekoppelt, geführt oder an diesem festgelegt ist und/oder
b) das mindestens eine Befestigungselement (48) in Form einer Schelle (52), eines Kabelbinders (54) oder eines Hüllschlauchs (50) zum Aufnehmen des Fluidschlauchs (16) und der Fluidschlauchstabilisierungsvorrichtung (14) ausgebildet ist
und/oder
c) das mindestens eine Befestigungselement (48) kraft-, form- oder stoffschlüssig mit dem Fluidschlauch (16) verbunden oder einstückig mit dem Fluidschlauch (16) ausgebildet ist
und/oder
d) an den Fluidschlauch (16) angeformt ist, insbesondere durch Anspritzen,
und/oder
e) das mindestens eine Befestigungselement (48) in Form einer Aufnahme (56) für die Fluidschlauchstabilisierungsvorrichtung (14) ausgebildet ist,
wobei insbesondere die Aufnahme (56) ausgebildet ist zum Aufnehmen der Fluidschlauchstabilisierungsvorrichtung (14) insgesamt und/oder des mindestens einen, insbesondere eines einzelnen, langgestreckten stabförmigen Verstärkungselements (34),
und/oder
f) dass der Fluidschlauch mehrere Befestigungselemente (34) umfasst, insbesondere zwei, drei, vier, fünf, sechs, sieben, acht oder mehr.

13. Fluidschlauch nach einem der Ansprüche 9 bis 12, **dadurch gekennzeichnet, dass**
a) die mehreren Verstärkungselemente (34) den Fluidschlauch (16) umgebend an diesem festgelegt sind
und/oder
b) der Fluidschlauch (16) aus einem Kunststoff hergestellt ist, insbesondere durch Extrudieren oder Spritzgießen,
und/oder
c) der Fluidschlauch (16) elastisch verformbar ausgebildet ist
und/oder
d) der Fluidschlauch eine Länge in einem Bereich von etwa 4 m bis etwa 12 m aufweist, insbesondere in einem Bereich von etwa 4,5 m bis etwa 6,5 m oder in einem Bereich von etwa 8 m bis etwa 12 m, weiter insbesondere eine Länge von etwa 5,5 m oder 10 m.

14. Reinigungsgerät (10) **gekennzeichnet durch** einen Fluidschlauch (16) nach einem der Ansprüche 9 bis 13.

15. Reinigungsgerät nach Anspruch 14, **dadurch gekennzeichnet, dass** das Reinigungsgerät (10)
a) in Form eines Sauggeräts oder in Form eines Hochdruckreinigungsgeräts ausgebildet ist
und/oder
b) in Form eines stationären Reinigungsgeräts (10) oder in Form eines mobilen, insbesondere trag- oder fahrbaren, Reinigungsgeräts (10) ausgebildet ist
und/oder
c) das Reinigungsgerät (10) eine Aufnahme (18) oder Halterung für die Fluidschlauchstabilisierungsvorrichtung (14) und/oder für den Fluidschlauch (16) aufweist,
wobei insbesondere das Reinigungsgerät (10) ein Gehäuse (12) aufweist und dass die Aufnahme (18) oder Halterung für die Fluidschlauchstabilisierungsvorrichtung (14) und/oder für den Fluidschlauch (16) am oder im Gehäuse (12) angeordnet oder ausgebildet ist.

## Claims

1. Fluid hose stabilizing device (14) for stabilizing a fluid hose (16) of a cleaning apparatus (10), wherein the fluid hose stabilizing device (14) comprises at least one device section (62) having a first and a second end (20, 30), wherein the device section (62) has a modulus of elasticity, wherein the modulus of elasticity changes starting from the first end (20) in a direction towards the second end (30) of the device section (62), wherein the fluid hose stabilizing device (14) comprises at least one elongated, rod-shaped and elastically bendable reinforcing element (34) and wherein the at least one reinforcing element (34) forms the device section (62) at least in part or sections, wherein the modulus of elasticity changes, at least in sections, continuously and/or in at least one step between the first and the second end (20, 30), wherein the modulus of elasticity of the device section (62) decreases between the first and the second end (20, 30), and wherein the fluid hose stabilizing device (14) has a fixing section (42) for fixing or attaching to a cleaning apparatus (10).

2. Fluid hose stabilizing device in accordance with claim 1, **characterized in that** the at least one elongated reinforcing element (34) is produced or formed from a non-reinforced plastics material or a non-fibre-reinforced plastics material or a plastics material reinforced with glass fibres or carbon fibres or from at least one leaf spring.

3. Fluid hose stabilizing device in accordance with any one of the preceding claims, **characterized in that**
a) the fixing section (42) extends starting from a first end (20) of the fluid hose stabilizing device (14)
and/or
b) the fixing section (42) has a first end (20) and a second end (44) and **in that** a modulus of elasticity of the fixing section (42) is constant or substantially constant along the extension of the fixing section from the first end to the second end (20, 44) thereof.

4. Fluid hose stabilizing device in accordance with any one of the preceding claims, **characterized in that** the fluid hose stabilizing device (14) comprises a plurality of elongated, rod-shaped and elastically bendable reinforcing elements (34).

5. Fluid hose stabilizing device in accordance with claim 4, **characterized in that**
a) the plurality of reinforcing elements (34) each have a different length
and/or
b) at least one of the plurality of reinforcing elements (34) has a constant cross-section along its extension
and/or
c) at least one of the plurality of reinforcing elements (34) has a constant modulus of elasticity along its extension.

6. Fluid hose stabilizing device in accordance with any one of the preceding claims, **characterized in that** the at least one reinforcing element (34) or at least one of the plurality of reinforcing elements (34)
a) has a decreasing cross-section along its extension, in particular a cross-section that decreases continuously and/or in at least one step,
and/or
b) has a first end (20) and a second end (30) and **in that** a modulus of elasticity changes starting from the first end (20) in a direction towards the second end (30), in particular continuously and/or in at least one step,
wherein in particular the modulus of elasticity of the at least one reinforcing element (34) or of the at least one of the plurality of reinforcing elements (34) decreases between the first and the second end.

7. Fluid hose stabilizing device in accordance with any one of claims 4 to 6, **characterized in that** the plurality of reinforcing elements (34)
a) are formed separately from one another
and/or
b) are connected or coupled together in a bundle-like manner for forming the fluid hose stabilizing device (14)
and/or
c) are arranged such that a first end (20) of the fluid hose stabilizing device (14) is defined by at least one first end (20) of one of the plurality of reinforcing elements (34), in particular by all first ends (20) of the plurality of reinforcing elements (34),
and/or
d) are arranged such that a second end (30) of the fluid hose stabilizing device (14) is defined by at least one second end (30) of the plurality of reinforcing elements (34), in particular by all second ends (30) of the plurality of reinforcing elements (34),
and/or
e) are arranged one after the other such that their respective individual lengths add up to an overall length
and/or
f) are made of different materials, in particular of materials having different moduli of elasticity.

8. Fluid hose stabilizing device in accordance with any one of the preceding claims, **characterized in that**
a) the fluid hose stabilizing device comprises a fixing device (46) for fixing the fluid hose stabilizing device (14) to a fluid hose (16) of a cleaning apparatus (10),
wherein in particular the fixing device (46) comprises at least one fixing element (48) for fixing the fluid hose stabilizing device (14) to a fluid hose (16) of a cleaning apparatus (10),
wherein further in particular the at least one fixing element (48) is configured in the form of a clamp (52), a cable tie (54) or a sheath tube (50) for receiving the fluid hose (16) and the fluid hose stabilizing device (14),
and/or
b) the at least one reinforcing element (34) has a length, in particular a free length (26) exclusive of the fixing section (42), in a range of approximately 1 m to approximately 3 m, in particular in a range of approximately 1.2 m to approximately 2 m,
and/or
c) the at least one reinforcing element (34) has a maximum diameter in a range of approximately 9 mm to approximately 20 mm, in particular in a range of approximately 11 mm to approximately 15 mm, and **in that** the at least one reinforcing element (34) has a minimum diameter in a range of approximately 2 mm to approximately 10 mm, in particular, in a range of approximately 3 mm to approximately 7 mm.

9. Fluid hose (16) for a cleaning apparatus, **characterized by** a fluid hose stabilizing device (14) in accordance with any one of the preceding claims for stabilizing the fluid hose (16).

10. Fluid hose in accordance with claim 9, **characterized in that** the fluid hose (16)
a) is configured in the form of a suction hose for a cleaning apparatus (10) in the form of a suction apparatus or in the form of a high-pressure hose for a cleaning apparatus (10) in the form of a high-pressure cleaning apparatus
and/or
b) comprises a fixing device (46) for fixing the fluid hose stabilizing device (14) along at least part of an overall length of the fluid hose (16).

11. Fluid hose in accordance with claims 9 or 10, **characterized in that** the fluid hose (16) comprises a fixing device (46) for fixing the fluid hose stabilizing device (14) along at least part of an overall length of the fluid hose (16),
wherein in particular the fixing device (46) comprises at least one fixing element (48) for fixing the fluid hose stabilizing device (14) along at least part of an overall length of the fluid hose (16).

12. Fluid hose in accordance with claim 11, **characterized in that** the fixing device (46) comprises at least one fixing element (48) for fixing the fluid hose stabilizing device (14) along at least part of an overall length of the fluid hose (16) and **in that**
a) the at least one fixing element (48) on the fluid hose (16) is arranged or configured such that the fluid hose stabilizing device (14) is, at least at its free end (30) or in the area of its free end (30), coupled with the fluid hose (16), guided or fixed thereto
and/or
b) the at least one fixing element (48) is configured in the form of a clamp (52), a cable tie (54) or a sheath tube (50) for receiving the fluid hose (16) and the fluid hose stabilizing device (14)
and/or
c) the at least one fixing element (48) is connected to the fluid hose (16) in a force-locking connection or in a form-locking connection or with a substance-to-substance bond or is formed in one piece with the fluid hose (16)
and/or
d) is integrally formed on the fluid hose (16), in particular integrally moulded thereon by injection moulding,
and/or
e) the at least one fixing element (48) is configured in the form of a receptacle (56) for the fluid hose stabilizing device (14),
wherein in particular the receptacle (56) is configured for receiving the whole fluid hose stabilizing device (14) and/or at least one, in particular a single, elongated, rod-shaped reinforcing element (34),
and/or
f) that the fluid hose comprises a plurality of fixing elements (34), in particular two, three, four, five, six, seven, eight or more.

13. Fluid hose in accordance with any one of claims 9 to 12, **characterized in that**
a) the plurality of reinforcing elements (34) are fixed to the fluid hose (16) in surrounding relationship therewith
and/or
b) that the fluid hose (16) is made of a plastics material, in particular by extrusion or injection moulding,
and/or
c) the fluid hose (16) is of elastically deformable configuration
and/or
d) the fluid hose has a length in a range of approximately 4 m to approximately 12 m, in particular in a range of approximately 4.5 m to approximately 6.5 m or in a range of approximately 8 m to approximately 12 m, further particularly a length of approximately 5.5 m or 10 m.

14. Cleaning apparatus (10), **characterized by** a fluid hose (16) in accordance with any one of claims 9 to 13.

15. Cleaning apparatus in accordance with claim 14, **characterized in that** the cleaning apparatus (10)
a) is configured in the form of a suction apparatus or in the form of a high-pressure cleaning apparatus
and/or
b) is configured in the form of a stationary cleaning apparatus (10) or in the form of a mobile, in particular portable or travelling, cleaning apparatus (10)
and/or
c) the cleaning apparatus (10) has a receptacle (18) or holder for the fluid hose stabilizing device (14) and/or for the fluid hose (16), wherein in particular the cleaning apparatus (10) has a housing (12) and **in that** the receptacle (18) or the holder for the fluid hose stabilizing device (14) and/or for the fluid hose (16) is arranged or formed on or in the housing (12).

## Revendications

1. Dispositif de stabilisation de flexible à fluide (14) pour stabiliser un flexible à fluide (16) d'un appareil de nettoyage (10), dans lequel le dispositif de stabilisation de flexible à fluide (14) présente au moins une section de dispositif (62) avec une première et une deuxième extrémité (20, 30), dans lequel la section de dispositif (62) présente un module d'élasticité, dans lequel le module d'élasticité varie à partir de la première extrémité (20) en direction de la deuxième extrémité (30) de la section de dispositif (62), dans lequel le dispositif de stabilisation de flexible à fluide (14) comprend au moins un élément de renforcement (34) allongé, en forme de barre et élastiquement pliable et dans lequel l'au moins un élément de renforcement (34) forme au moins en partie ou sur certaines sections la section de dispositif (62), dans lequel le module d'élasticité entre la première et la deuxième extrémité (20, 30) varie au moins sur certaines sections de manière continue et/ou en au moins une étape, dans lequel le module d'élasticité de la section de dispositif (62) diminue entre la première et la deuxième extrémité (20, 30) et dans lequel le dispositif de stabilisation de flexible à fluide (14) présente une section de fixation (42) pour l'immobilisation ou la fixation sur un appareil de nettoyage (10).

2. Dispositif de stabilisation de flexible à fluide selon la revendication 1, **caractérisé en ce que** l'au moins un élément de renforcement (34) allongé est fabriqué ou réalisé à partir d'une matière plastique non renforcée ou d'une matière plastique non renforcée par des fibres ou d'une matière plastique renforcée par des fibres de verre ou des fibres de carbone ou à partir d'au moins un ressort à lames.

3. Dispositif de stabilisation de flexible à fluide selon l'une quelconque des revendications précédentes, **caractérisé en ce que**
a) la section de fixation (42) s'étend à partir d'une première extrémité (20) du dispositif de stabilisation de flexible à fluide (14)
et/ou
b) la section de fixation (42) présente une première extrémité (20) et une deuxième extrémité (44) et qu'un module d'élasticité de la section de fixation (42) le long de son étendue de sa première à sa deuxième extrémité (20, 44) est constante ou sensiblement constante.

4. Dispositif de stabilisation de flexible à fluide selon l'une quelconque des revendications précédentes, **caractérisé en ce que** le dispositif de stabilisation de flexible à fluide (14) comprend plusieurs éléments de renforcement (34) allongés, en forme de barre et élastiquement flexibles.

5. Dispositif de stabilisation de flexible à fluide selon la revendication 4, **caractérisé en ce que**
a) les plusieurs éléments de renforcement (34) présentent respectivement une longueur différente
et/ou
b) au moins un des plusieurs éléments de renforcement (34) présente une section transversale constante le long de son étendue et/ou
c) au moins un des plusieurs éléments de renforcement (34) présente un module d'élasticité constant le long de son étendue.

6. Dispositif de stabilisation de flexible à fluide selon l'une quelconque des revendications précédentes, **caractérisé en ce que** l'au moins un élément de renforcement (34) ou au moins un des plusieurs éléments de renforcement (34)
a) présente une section transversale décroissante le long de son étendue, en particulier une section transversale décroissante de manière continue et/ou en au moins une étape,
et/ou
b) présente une première extrémité (20) et une deuxième extrémité (30) et qu'un module d'élasticité varie à partir de la première extrémité (20) en direction de la deuxième extrémité (30), en particulier de manière continue et/ou en au moins une étape,
dans lequel en particulier le module d'élasticité de l'au moins un élément de renforcement (34) ou de l'au moins un des plusieurs éléments de renforcement (34) décroit entre la première et la deuxième extrémité.

7. Dispositif de stabilisation de flexible à fluide selon l'une quelconque des revendications 4 à 6, **caractérisé en ce que** les plusieurs éléments de renforcement (34)
a) sont réalisés de manière séparée les uns des autres
et/ou
b) sont reliés ou accouplés les uns aux autres à la façon d'un paquet pour la réalisation du dispositif de stabilisation de flexible à fluide (14)
et/ou
c) sont disposés de telle sorte qu'une première extrémité (20) du dispositif de stabilisation de flexible à fluide (14) est définie par au moins une première extrémité (20) d'un des plusieurs éléments de renforcement (34), en particulier par toutes les premières extrémités (20) des plusieurs éléments de renforcement (34),
et/ou
d) sont disposés de telle sorte qu'une deuxième extrémité (30) du dispositif de stabilisation de flexible à fluide (14) est définie par au moins une deuxième extrémité (30) des plusieurs éléments de renforcement (34), en particulier par toutes les deuxièmes extrémités (30) des plusieurs éléments de renforcement (34),
et/ou
e) sont disposés les uns derrière les autres de telle sorte que leurs longueurs individuelles respectives s'additionnent en une longueur totale
et/ou
f) sont fabriqués à partir de matériaux différents, en particulier à partir de matériaux avec des modules d'élasticité différents.

8. Dispositif de stabilisation de flexible à fluide selon l'une quelconque des revendications précédentes, **caractérisé en ce que**
a) le dispositif de stabilisation de flexible à fluide présente un système de fixation (46) pour fixer le dispositif de stabilisation de flexible à fluide (14) sur un flexible à fluide (16) d'un appareil de nettoyage (10),
dans lequel en particulier le système de fixation (46) comprend au moins un élément de fixation (48) pour fixer le dispositif de stabilisation de flexible à fluide (14) sur un flexible à fluide (16) d'un appareil de nettoyage (10),
dans lequel en outre en particulier l'au moins un élément de fixation (48) est réalisé sous forme d'un collier (52), d'un serre-câble (54) ou d'un flexible-gaine (50) pour recevoir le flexible à fluide (16) et le dispositif de stabilisation de flexible à fluide (14),
et/ou
b) l'au moins un élément de renforcement (34) présente une longueur, en particulier une longueur libre (26) sans section de fixation (42), dans une plage de sensiblement 1 m à sensiblement 3 m, en particulier dans une plage de sensiblement 1,2 m à sensiblement 2 m, et/ou
c) l'au moins un élément de renforcement (34) présente un diamètre maximal dans une plage de sensiblement 9 mm à sensiblement 20 mm, en particulier dans une plage de sensiblement 11 mm à sensiblement 15 mm, et que l'au moins un élément de renforcement (34) présente un diamètre minimal dans une plage de sensiblement 2 mm à sensiblement 10 mm, en particulier dans une plage de sensiblement 3 mm à sensiblement 7 mm.

9. Flexible à fluide (16) pour un appareil de nettoyage, **caractérisé par** un dispositif de stabilisation de flexible à fluide (14) selon l'une quelconque des revendications précédentes pour stabiliser le flexible à fluide (16).

10. Flexible à fluide selon la revendication 9, **caractérisé en ce que** le flexible à fluide (16)
a) est réalisé sous forme d'un flexible à fluide pour un appareil de nettoyage (10) sous forme d'un appareil d'aspiration ou sous forme d'un flexible haute pression pour un appareil de nettoyage (10) sous forme d'un appareil de nettoyage haute pression
et/ou
b) comprend un système de fixation (46) pour immobiliser le dispositif de stabilisation de flexible à fluide (14) le long d'au moins une partie d'une longueur totale du flexible à fluide (16).

11. Flexible à fluide selon la revendication 9 ou 10, **caractérisé en ce que** le flexible à fluide (16) comprend un système de fixation (46) pour immobiliser le dispositif de stabilisation de flexible à fluide (14) le long d'au moins une partie d'une longueur totale du flexible à fluide (16),
dans lequel en particulier le système de fixation (46) comprend au moins un élément de fixation (48) pour immobiliser le dispositif de stabilisation de flexible à fluide (14) le long d'au moins une partie d'une longueur totale du flexible à fluide (16).

12. Flexible à fluide selon la revendication 11, **caractérisé en ce que** le système de fixation (46) comprend au moins un élément de fixation (48) pour immobiliser le dispositif de stabilisation de flexible à fluide (14) le long d'au moins une partie d'une longueur totale du flexible à fluide (16) et que
a) l'au moins un élément de fixation (48) est disposé et réalisé sur le flexible à fluide (16) de telle sorte que le dispositif de stabilisation de flexible à fluide (14) au moins à son extrémité libre (30) ou dans la zone de son extrémité libre (30) est accouplé au flexible à fluide (16), guidé ou immobilisé sur celui-ci
et/ou
b) l'au moins un élément de fixation (48) est réalisé sous forme d'un collier (52), d'un serre-câble (54) ou d'un flexible-gaine (50) pour recevoir le flexible à fluide (16) et le dispositif de stabilisation de flexible à fluide (14)
et/ou
c) l'au moins un élément de fixation (48) est relié au flexible à fluide (16) à force, par coopération de formes ou par liaison de matière ou réalisé d'une seule pièce avec le flexible à fluide (16) et/ou
d) est formé sur le flexible à fluide (16), en particulier par moulage par injection,
et/ou
e) l'au moins un élément de fixation (48) est réalisé sous forme d'un logement (56) pour le dispositif de stabilisation de flexible à fluide (14),
dans lequel en particulier le logement (56) est réalisé pour recevoir le dispositif de stabilisation de flexible à fluide (14) dans son ensemble et/ou l'au moins un, en particulier un seul, élément de renforcement (34) allongé en forme de barre,
et/ou
f) que le flexible à fluide comprend plusieurs éléments de fixation (34), en particulier deux, trois, quatre, cinq, six, sept, huit ou plus.

13. Flexible à fluide selon l'une quelconque des revendications 9 à 12, **caractérisé en ce que**
a) les plusieurs éléments de renforcement (34) sont immobilisés sur le flexible à fluide (16) de manière à entourer celui-ci
et/ou
b) le flexible à fluide (16) est fabriqué à partir d'une matière plastique, en particulier par extrusion ou moulage par injection,
et/ou
c) le flexible à fluide (16) est réalisé de manière élastiquement déformable
et/ou
d) le flexible à fluide présente une longueur dans une plage de sensiblement 4 m à sensiblement 12 m, en particulier dans une plage de sensiblement 4,5 m à sensiblement 6,5 m ou dans une plage de sensiblement 8 m à sensiblement 12 m, plus particulièrement une longueur de sensiblement 5,5 m ou 10 m.

14. Appareil de nettoyage (10) **caractérisé par** un flexible à fluide (16) selon l'une quelconque des revendications 9 à 13.

15. Appareil de nettoyage selon la revendication 14, **caractérisé en ce que** l'appareil de nettoyage (10)
a) est réalisé sous forme d'un appareil d'aspiration ou sous forme d'un appareil de nettoyage haute pression
et/ou
b) est réalisé sous forme d'un appareil de nettoyage (10) fixe ou sous forme d'un appareil de nettoyage (10) mobile, en particulier portatif ou roulant
et/ou
c) l'appareil de nettoyage (10) présente un logement (18) ou support pour le dispositif de stabilisation de flexible à fluide (14) et/ou pour le flexible à fluide (16),
dans lequel en particulier l'appareil de nettoyage (10) présente un boîtier (12) et que le logement (18) ou support pour le dispositif de stabilisation de flexible à fluide (14) et/ou pour le flexible à fluide (16) est disposé ou réalisé sur ou dans le boîtier (12).
